# EUROPÄISCHE PATENTSCHRIFT

(11) **EP 0 509 504 B1**
(45) Veröffentlichungstag und Bekanntmachung des Hinweises auf die Patenterteilung: **06.09.1995**
(21) Anmeldenummer: 92106620.5
(22) Anmeldetag: 16.04.1992
(51) Int. Cl.: B21F 1/00

(54) **Bearbeitungsmaschine mit Mittelantrieb**
Forming machine with central drive arrangement
Machine de formage avec arrangement d'entraînement central

(30) Priorität: 17.04.1991 DE 4112571
(43) Veröffentlichungstag der Anmeldung: 21.10.1992
(73) Patentinhaber: Otto Bihler Maschinenfabrik GmbH & Co. KG, 87642 Halblech (DE)
(72) Erfinder: Bihler, Otto, W-8959 Halblech (DE); Brüller, Eduard, CH-4632 Trimbach (CH)
(74) Vertreter: Weickmann, Heinrich, Dipl.-Ing.

(56) Entgegenhaltungen:
- DE-C- 3 205 493
- DE-C- 3 234 981

## Beschreibung

Die Erfindung betrifft eine Bearbeitungsmaschine, insbesondere einen Stanz- und Biegeautomaten zur Bearbeitung von Draht- und Bandmaterial,
umfassend eine Antriebseinheit mit einem Antriebsgehäuse und mit einem innerhalb des Antriebsgehäuses untergebrachten, an einen Antriebsmotor angeschlossenen Verteilergetriebe,
wobei das Antriebsgehäuse zwei einander gegenüberliegende und zueinander im wesentlichen parallele Antriebsgehäuse-Stirnwände und mindestens eine zu den Antriebsgehäuse-Stirnwänden im wesentlichen orthogonale Antriebsgehäuse-Sichtwand aufweist,
wobei weiter das Verteilergetriebe in einer ersten Antriebsgehäuse-Stirnwand mindestens einen ersten Wellenanschluß mit zur ersten Antriebsgehäuse-Stirnwand im wesentlichen senkrechter Drehachse aufweist,
wobei weiter diese erste Antriebsgehäuse-Stirnwand im Umgebungsbereich des mindestens einen Wellenanschlusses zum Anbau eines ersten Gehäusekastens ausgebildet ist,
wobei weiter dieser erste Gehäusekasten eine Stirnwand-Anschlußfläche zum Anschluß an die erste Antriebsgehäuse-Stirnwand und mindestens eine zu der Antriebsgehäuse-Sichtwand im wesentlichen parallele Gehäusekasten-Sichtwand aufweist,
wobei weiter in dem ersten Gehäusekasten mindestens eine zum Anschluß an den mindestens einen ersten Wellenanschluß bestimmte und geeignete, mit ihrer Achse zu der ersten Stirnwand-Anschlußfläche im wesentlichen orthogonal verlaufende Gehäusekastenwelle gelagert ist,
wobei weiter an der Gehäusekasten-Sichtwand mindestens eine Befestigungsstelle für eine Bearbeitungseinheit vorgesehen ist und ferner in der Gehäusekasten-Sichtwand mindestens eine Öffnung zur Herstellung einer Antriebsverbindung zwischen der Bearbeitungseinheit und der Gehäusekastenwelle vorgesehen ist.

Eine solche Bearbeitungsmaschine ist beispielsweise aus der DE-OS 32 05 493 bekannt.

Bei der bekannten Bearbeitungsmaschine erstrecken sich zwei von ein und derselben Antriebsgehäuse-Stirnwand ausgehende Gehäusekästen in derselben Richtung bis zu einem Endkasten. Zwischen den beiden Gehäusekästen ist ein Durchgang gebildet. Jeder der Gehäusekästen weist in seiner Gehäusekasten-Sichtwand eine Mehrzahl von Befestigungsstellen für Bearbeitungseinheiten auf. Jeder dieser Befestigungsstellen ist eine Öffnung zugeordnet. In jede Öffnung ist eine Schneckenradwelle eingesetzt. Jede Schneckenradwelle trägt ein Schneckenrad. Die Schneckenräder stehen in Eingriff mit einer als Schneckenwelle ausgebildeten Gehäusekastenwelle innerhalb des Gehäuses. Die Enden der Schneckenradwellen verschließen die Gehäuseöffnungen. An den Enden der Schneckenradwellen im Bereich der Gehäuseöffnungen sind Kupplungselemente angebracht. Die Bearbeitungseinheiten können an der Gehäusekasten-Sichtwand befestigt werden. In den Antriebseinheiten sind Anschlußwellen gelagert, die jeweils ein Gegenkupplungselement zum Kuppeln mit dem Kupplungselement der jeweiligen Schneckenradwelle aufweisen. Es können also an beliebigen Stellen, d. h. also in Zuordnung zu beliebigen Bohrungen, längs des jeweiligen Gehäusekastens Bearbeitungseinheiten angebracht werden und mit der Schneckenwelle innerhalb des Gehäusekastens in Antriebsverbindung gebracht werden. Die beiden Gehäusekästen sind länglich, so daß eine Vielzahl von Bearbeitungseinheiten an der jeweiligen Gehäusekasten-Sichtfläche angebracht werden können.

Die bekannte Bearbeitungsmaschine weist ferner im Bereich des Antriebsgehäuses eine Einzugsvorrichtung auf, mittels welcher ein Band- oder Drahtmaterial in den Bereich der Bearbeitungseinheiten eingeführt und in Längsrichtung der beiden länglichen Gehäusekästen transportiert werden kann. Ferner ist im Bereich des Antriebsgehäuses eine Stanzpresse vorgesehen, mittels welcher an dem Bandmaterial oder Drahtmaterial Stanzarbeiten ausgeführt werden können. Durch diese Stanzpresse können auch einzelne Werkstücke von dem Band- oder Drahtmaterial abgeschnitten werden, die dann auf dem Wege längs der länglichen Gehäusekästen auf die verschiedenste Weise weiterbearbeitet werden können, z. B. durch Biegen, Stanzen, Bohren, Gewindebohren oder Zusammenfügen mit anderweitig zugeführten Teilen.

Es ist ohne weiteres ersichtlich, daß man die Gehäusekästen je nach Länge mit einer Vielzahl von Bearbeitungseinheiten bestücken kann. Damit wird es möglich, lange Werkstücke zu bearbeiten. Ebenso wird es möglich, bei Vorhandensein entsprechender Transportmittel einzelne auch kürzere Werkstücke einer Vielzahl von Bearbeitungsvorgängen zu unterwerfen.

Die Länge der Gehäusekästen hängt von der Länge der zu bearbeitenden Werkstücke und/oder von der Vielzahl der an den Werkstücken vorzunehmenden Bearbeitungsvorgänge ab. Je länger die Werkstücke in Längsrichtung der Gehäusekästen sind und/oder je größer die Zahl der vorzunehmenden Bearbeitungsvorgänge ist, umso größer wird naturgemäß die Länge der Gehäusekästen.

Die als Schneckenwellen ausgebildeten Gehäusekastenwellen innerhalb der Gehäusekästen können mit einer relativ großen Drehzahl angetrieben werden, die dann an den Anschlußstellen der einzelnen Bearbeitungseinheiten durch das Schneckenrad ins Langsame übersetzt werden. Auf diese Weise ist es möglich, die Antriebsleistung auf die einzelnen Antriebseinheiten mit einer hohen Drehzahl zu übertragen und dementsprechend in den Gehäusekastenwellen nur verhältnismäßig geringe Drehmomente zu übertragen. Auch wenn man an der Anschluß stelle der Bearbeitungseinheiten große Untersetzungsverhältnisse vorsieht, d. h. also von großen Drehzahlen der Gehäusekastenwellen auf kleine Drehzahlen der Bearbeitungseinheiten untersetzt, können die in den Gehäusekastenwellen, also beispielsweise in den Schneckenwellen zu übertragenden Drehmomente relativ groß werden, wenn die Gehäusekästen und demgemäß die Gehäusekastenwellen infolge einer großen Anzahl benötigter Bearbeitungseinheiten relativ lang werden. Dieses Problem tritt insbesondere dann auf, wenn an einer oder mehreren von dem Antriebsgehäuse ferngelegenen Bearbeitungseinheiten große Bearbeitungskräfte abverlangt werden. Große Drehmomente in den Gehäusekastenwellen belasten diese Gehäusekastenwellen auf Torsion. Dies bedeutet, daß zwischen Bearbeitungseinheiten nahe dem Antriebsgehäuse und Bearbeitungseinheiten fern dem Bearbeitungsgehäuse Phasenverschiebungen durch Wellentorsion auftreten. Diese Phasenverschiebungen sind bei der Mehrfach-Bearbeitung eines Werkstücks schwer zu berücksichtigen und führen zu Bearbeitungsungenauigkeiten. Hinzu kommt folgendes: Schneckenwellen lassen sich in der Herstellungspraxis nur mit begrenzter Länge herstellen. Werden die Gehäusekästen sehr lang, so muß man die in den Gehäusekästen untergebrachten Schneckenwellen aus einzelnen Abschnitten zusammensetzen und zwischen aufeinander folgenden Abschnitten der Schneckenwellen Trennkupplungen vorsehen. Diese Trennkupplungen werden naturgemäß mit dem Drehmoment der Gehäusekastenwellen belastet. Während der Lebenszeit einer Bearbeitungsmaschine können in diesen Trennkupplungen Abnutzungserscheinungen auftreten, die zu weiteren schwer kontrollierbaren Winkelfehlern und damit Phasenverschiebungen zwischen Bearbeitungseinheiten nahe dem Antriebsgehäuse und Bearbeitungseinheiten fern dem Antriebsgehäuse führen können.

Aus der deutschen Offenlegungsschrift 32 34 981 ist es bekannt, die von einer Antriebsgehäuse-Stirnwand in einer Richtung ausgehenden Gehäusekästen in einzelne Abschnitte zu unterteilen und in diesen einzelnen Abschnitten entsprechend lange einzelne Gehäusekastenwellen unterzubringen. Die Gehäusekasten-Stirnwände werden stirnseitig miteinander verbunden, und dementsprechend werden auch die Wellenabschnitte aufeinander folgender Gehäusekastenabschnitte stirnseitig miteinander verbunden. Bei dieser bekannten Ausführungsform kommt zu den bereits geschilderten Problemen noch das weitere Problem hinzu, daß die einzelnen Gehäusekastenabschnitte miteinander nur schwer exakt gefluchtet werden können. Es besteht die Gefahr, daß die aus mehreren Abschnitten zusammengesetzten Gehäusekästen von der Geradlinigkeit abweichen und dadurch noch weitere Bearbeitungsfehler provozieren.

Der Erfindung liegt die Aufgabe zugrunde, eine Bearbeitungsmaschine der eingangs bezeichneten Art so auszubilden, daß bei gegebener Bearbeitungslänge die Phasenverschiebungen durch Torsion und Abnützung zwischen beabstandeten Bearbeitungseinheiten verringert oder vollständig vermieden werden.

Zur Lösung dieser Aufgabe wird erfindungsgemäß vorgeschlagen, daß das Verteilergetriebe in der zweiten Antriebsgehäuse-Stirnwand mindestens einen zweiten Wellenanschluß mit zu dieser Antriebsgehäuse-Stirnwand im wesentlichen senkrechter Drehachse aufweist und daß diese zweite Antriebsgehäuse-Stirnwand zum Anschluß eines zweiten, im wesentlichen entsprechenden Gehäusekastens im Umgebungsbereich des mindestens einen, zweiten Wellenanschlusses ausgebildet ist.

Bei der erfindungsgemäßen Ausgestaltung ist es also möglich, das Antriebsgehäuse gewissermaßen an mittlerer Stelle der gesamten Bearbeitungsstrecke anzubringen, so daß - senkrecht zu den Sichtwänden des Antriebsgehäuses und der Gehäusekästen betrachtet - zu beiden Seiten des Antriebsgehäuses Bearbeitungsstellen liegen. Die Länge der Bearbeitungsstrecke ist dann bestimmt durch die Summe der Länge der zu beiden Seiten des Antriebsgehäuses gelegenen Gehäusekästen und die Ausdehnung des Antriebsgehäuses in Längsrichtung der beiden Gehäusekästen. Dies bedeutet, daß im günstigsten Fall der Anordnung des Antriebsgehäuses in der geometrischen Mitte der Gesamtbearbeitungslänge der Bearbeitungsmaschine die Längenausdehnung der einzelnen Gehäusekastenwellen, also insbesondere Schneckenwellen, nur mehr annähernd die Hälfte der Bearbeitungslänge beträgt. Von jeder der Gehäusekastenwellen ist dann im Idealfall nur mehr die Hälfte der insgesamt notwendigen Bearbeitungseinheiten anzukuppeln. Dies bedeutet, daß die Drehmomentbelastung und die Länge der Gehäusekastenwellen annähernd halbiert ist, und dies bedeutet weiter, daß etwaige Phasenverschiebungen zwischen einander fern gelegenen Bearbeitungseinheiten im Idealfall bis auf die Hälfte reduziert sind. Gleichzeitig läßt sich das Problem abschnittweise zusammengesetzter Schneckenwellen reduzieren oder ausschalten: nimmt man an, daß eine Gesamtbearbeitungslänge A erforderlich ist, so brauchen die einzelnen Gehäusekastenwellen nur noch eine Länge 1/2 x A zu haben (ohne Berücksichtigung der Ausdehnung des Antriebsgehäuses). Man kommt dann unter Umständen völlig ohne abschnittsweise unterteilte Getriebekastenwellen aus. Jedenfalls kann man aber die Zahl der Unterteilungsstellen der Getriebekastenwellen zwischen dem Antriebsgehäuse und der am weitesten entfernten Bearbeitungseinheit auf die Hälfte reduzieren.

Nach einer bevorzugten Ausführungsform der Erfindung ist vorgesehen, daß ein erster Wellenanschluß in der ersten Antriebsgehäuse-Stirnwand und ein zweiter Wellenanschluß in der zweiten Antriebsgehäuse-Stirnwand in axialer Flucht zueinander angeordnet sind und daß zu dem ersten und zu dem zweiten Wellenanschluß gehörige Gehäusekästen an den zugehörigen Antriebsgehäuse-Stirnwänden derart anbringbar sind, daß sie in Achsrichtung der zugehörigen Gehäusekastenwellen im wesentlichen miteinander fluchten. Das aus Antriebsgehäuse und Gehäusekästen gebildete Gesamtgehäuse nimmt dann eine im wesentlichen kreuzförmige Gestalt an. Die Bearbeitung der Werkstücke kann von den beiden in Flucht miteinander angeordneten Gehäusekästen aus in ähnlicher Weise erfolgen, als wenn ein durchgehender entsprechend längerer Gehäusekasten an einer Antriebsgehäuse-Stirnwand des Antriebsgehäuses angeschlossen wäre.

Die Bearbeitungsverhältnisse an der erfindungsgemäßen Bearbeitungsmaschine können den Bearbeitungsverhältnissen an der aus der deutschen Offenlegungsschrift 32 05 493 bekannten Bearbeitungsmaschine weitgehend dadurch angepaßt werden, daß an der ersten und der zweiten Antriebsgehäuse-Stirnwand jeweils zwei erste bzw. zweite Wellenanschlüsse in Abstand voneinander vorgesehen sind, wobei jeweils ein erster und ein zweiter Wellenanschluß miteinander fluchten und im Bereich beider Wellenanschlüsse beider Antriebsgehäuse-Stirnwände jeweils ein Gehäusekasten anbringbar ist. In diesem Falle können, wie schon bei der bekannten Bearbeitungsmaschine nach der DE-OS 32 05 493, die jeweils zu bearbeitenden Werkstücke mit zwei entgegengerichteten Bearbeitungsrichtungen bearbeitet werden.

Im Hinblick auf den Transport der zu bearbeitenden Werkstücke aus dem Bereich des zweiten Gehäusekastens in den Bereich des ersten Gehäusekastens oder umgekehrt jeweils über das Antriebsgehäuse hinweg ist es empfehlenswert, daß die Gehäusekasten-Sichtwände des ersten und ggf. des zweiten Gehäusekastens im wesentlichen bündig zu der Antriebsgehäuse-Sichtwand liegen. In diesem Fall bestehen keine Hindernisse für den Transport der zu bearbeitenden Werkstücke über das Antriebsgehäuse hinweg. Die Werkstücke, aber auch ein noch zusammenhängendes Band- oder Drahtmaterial, können hindernisfrei über das Antriebsgehäuse hinweg transportiert werden.

Das Antriebsgehäuse kann grundsätzlich auf seiner von der Seitensichtwand abgelegenen Seite offen sein, um Zugang zu dem Verteilergetriebe zu ermöglichen. Bevorzugt wird allerdings eine Lösung dergestalt, daß das Antriebsgehäuse eine weitere zu der Antriebsgehäuse-Sichtwand im wesentlichen parallele und von dieser beabstandete Antriebsgehäuse-Sichtwand aufweist, welche ggf. als ein Deckel des im übrigen einstückigen Antriebsgehäuses ausgebildet sein kann. Bei dieser Ausführungsform kann das Verteilergetriebe innerhalb des Antriebsgehäuses voll gekapselt werden. Damit ist das Eindringen von Schmutz zu dem Verteilergetriebe unterbunden. Außerdem kann innerhalb des Antriebsgehäuses ein Ölbad aufrechterhalten werden.

Ebenso ist es möglich, daß die Gehäusekästen jeweils eine weitere zu der weiteren Antriebsgehäuse-Sichtwand im wesentlichen parallele Gehäusekasten-Sichtwand aufweisen, daß auch diese weiteren Gehäusekasten-Sichtwände jeweils mindestens eine Befestigungsstelle und eine Öffnung für eine Bearbeitungseinheit aufweisen und daß die weiteren Gehäusekasten-Sichtwände im wesentlichen bündig mit der weiteren Antriebsgehäuse-Sichtwand liegen. Auf diese Weise erhält man, wie schon in der Konstruktion nach der DE-OS 32 05 493, eine Bearbeitungsmaschine mit zwei voneinander abgelegenen Bearbeitungsebenen, wobei beide Bearbeitungsebenen auch im Bereich des Antriebsgehäuses für den Transport der Werkstücke über das Antriebsgehäuse hinweg hindernisfrei sind. Es wird darauf hingewiesen, daß zwischen zwei gleichgerichteten, d. h. von ein und derselben Antriebsgehäuse-Stirnwand in der gleichen Richtung ausgehenden Gehäusekästen ein Durchgang vorhanden sein kann. Dieser Durchgang erlaubt es dann, Werkstücke von einer ersten Bearbeitungsebene zu einer zweiten Bearbeitungsebene zu transportieren und die in der ersten Bearbeitungsebene begonnene Bearbeitung in der zweiten Bearbeitungsebene fortzusetzen. Auf diese Weise wird der Variationsbereich verschiedenster Bearbeitungsarten noch einmal verdoppelt. Dabei stört die Existenz des Getriebegehäuses nicht, da auch schon bei der bekannten Konstruktion nach der DE-OS 32 05 493 die Möglichkeit von Überbrückungsstücken im Bereich des Durchgangs in Betracht gezogen worden ist und im Falle der erfindungsgemäßen Konstruktion die Existenz des Getriebegehäuses zwischen zwei benachbarten Durchgängen nicht wesentlich anders wirkt, als bei der bekannten Ausführungsform die Existenz eines Überbrückungstücks zwischen zwei benachbarten Bereichen eines Durchgangs.

Bei der bekannten Ausführungsform nach der DE-OS 32 05 493 ist bereits die Möglichkeit angegeben, an den von dem Antriebsgehäuse abgelegenen Enden der Gehäusekästen diese durch eine zusätzliche Endkonstruktion miteinander zu verbinden. Auch bei der erfindungsgemäßen Konstruktion besteht die Möglichkeit, daß die Gehäusekästen an ihren von den Stirnwand-Anschlußflächen abgelegenen Enden jeweils eine Endkasten-Anschlußfläche zum Anschluß an jeweils einer Stirnwand eines Endkastens aufweisen. Damit erhält die erfindungsgemäße Konstruktion nicht nur eine vergleichbare, sondern eine noch größere Steifigkeit als die aus der DE-OS 32 05 493 bekannte Konstruktion, wobei die Vergrößerung der Steifigkeit auf der Existenz des Antriebsgehäuses zwischen den beiden Enden der Bearbeitungsmaschine beruht.

Wie aus der DE-OS 32 05 493 bekannt, ist es möglich, daß die Gehäusekästen in einer zu der jeweiligen Wellenachsrichtung senkrechten Schnittebene betrachtet einen im wesentlichen rechteckigen Umriß besitzen, welcher durch jeweils zwei zueinander parallele und voneinander beabstandete Sichtwände und jeweils zwei diese Sichtwände verbindenden Verbindungswände gebildet ist. Damit werden auch die Gehäusekastenwellen vollständig gekapselt, so daß auch sie in einem Ölbad laufen können, wobei die Ölbäder der Gehäusekästen mit dem Ölbad des Antriebsgehäuses kommunizieren können. Der konstruktive Aufbau der Antriebskästen ist dabei grundsätzlich beliebig wählbar. Bevorzugt wird allerdings eine Ausführungsform, bei der jeweils eine Sichtwand und zwei Verbindungswände einen Grundrahmen des Gehäusekastens bilden, in welchem die jeweilige Gehäusekastenwelle für Wartungsarbeiten zugänglich gelagert ist und die weitere Sichtwand als abnehmbarer Deckel ausgebildet ist.

Im Hinblick auf die Überwachung und ggf. Beeinflussung des Bearbeitungsvorgangs der Werkstücke sieht die DE-OS 32 05 493 vor, daß zwei zueinander parallele Bearbeitungsebenen an der Vorderseite und der Rückseite von Gehäusekästen im wesentlichen vertikal stehen. Dies läßt sich auch bei der erfindungsgemäßen Ausbildung ohne weiteres verwirklichen, und zwar dadurch, daß das Antriebsgehäuse und ggf. ein oder zwei Endkästen jeweils als vertikale Standsäule ausgebildet sind. Insbesondere läßt sich der Grundaufbau aus der DE-OS 32 05 493 bei Zugrundelegung des erfindungsgemäßen Konstruktionsprinzips dadurch verwirklichen, daß an mindestens einer Antriebsgehäuse-Stirnwand des Antriebsgehäuses zwei Gehäusekästen übereinander angeordnet sind.

Das Antriebsgehäuse und die Endkästen können auf einem Grundträger angeordnet sein, beispielsweise auf einer Grundplatte, die der jeweiligen Maschinengesamtlänge angepaßt ist und auf dem Fußboden einer Werkhalle aufliegt und ggf. verankert ist.

Der jeweilige Grundaufbau der Bearbeitungsmaschine bestehend aus Antriebsgehäuse und Gehäusekästen sowie ggf. Endkästen und Grundträger wird grundsätzlich im Herstellerbetrieb der Maschine ausgeführt. Die Anpassung der so von dem Herstellerbetrieb der Maschine an den Betreiber der Maschine gelieferten Maschine an verschiedene Werkstücke erfolgt ausschließlich durch Anbau verschiedenster Bearbeitungseinheiten, wie Materialeinzugsvorrichtungen, Bearbeitungsschlitten, Pressen und dgl. an die in ihrem Grundaufbau unverändert bleibende Maschine.

Die Ausbildung des Verteilergetriebes innerhalb des Antriebsgehäuses kann beliebig sein. Von Bedeutung ist es allerdings, das Verteilergetriebe so aufzubauen, daß die Ausdehnung des Antriebsgehäuses in der Ausladerichtung der Gehäusekästen möglichst gering wird, um die Folge der Bearbeitungseinheiten auch im Bereich des Antriebsgehäuses mit möglichst kurzem Abstand ausführen zu können. Diese Forderung läßt sich beispielsweise dadurch erfüllen, daß das Verteilergetriebe mindestens eine Verteilerwelle aufweist, welche von der ersten zur zweiten Antriebsgehäuse-Stirnwand durchgehend einen ersten Wellenanschluß und einen zweiten Wellenanschluß miteinander verbindet.

Sind an jeder Antriebsgehäuse-Stirnwand zwei Gehäusekästen angebracht, die nach verschiedenen Richtungen ausladen, so wird das Verteilergetriebe bevorzugt in der Weise ausgebildet, daß es zwei zueinander parallele und voneinander beabstandete Verteilerwellen aufweist, welche von der ersten Getriebegehäuse-Stirnwand zur zweiten Getriebegehäuse-Stirnwand durchlaufend jeweils einen ersten Wellenanschluß und einen zweiten Wellenanschluß miteinander verbinden. Dabei ergibt sich eine besonders einfache getriebliche Verbindung zwischen den beiden Verteilerwellen dadurch, daß diese mit je einem Verteilerzahnrad drehfest verbunden sind, daß zwischen den beiden Verteilerzahnrädern ein Zwischenzahnrad auf einer Zwischenwelle in dem Antriebsgehäuse gelagert ist und daß eine der Verteilerwellen über ein Übertragungsgetriebe mit dem Antriebsmotor antriebsmäßig verbunden ist.

Die Zwischenwelle kommt damit zwangsläufig in den Bereich eines Durchgangs zwischen zwei Gehäusekästen und kann an mindestens einem Ende zum Antrieb einer Hilfswelle ausgebildet sein. Dabei kann diese Hilfswelle zwischen zwei an ein und derselben Antriebsgehäuse-Stirnwand angebrachten Gehäusekästen ausschließlich oder zusätzlich gelagert sein. Diese Hilfswelle kann dem Antrieb verschiedenster Hilfsaggregate dienen, insbesondere einer Transporteinrichtung dienen, welche dazu bestimmt und geeignet ist, zu bearbeitende Werkstücke im wesentlichen orthogonal zu den Sichtwänden der beiden Gehäusekästen zwischen diesen hindurch zu transportieren.

Die Anschlußstellen des Verteilergetriebes können als Trennkupplungen, insbesondere als Steckkupplungen, ausgebildet sein, und die Gehäusekästen können lösbar mit dem Antriebsgehäuse und ggf. mit den Endkästen verbunden sein. Die Länge der Gehäusekästen und der zugehörigen Gehäusekästenwellen zu beiden Seiten des Antriebsgehäuses kann vom Hersteller entsprechend dem jeweiligen Kundenauftrag bestimmt werden; es ist also möglich, mit einem Typ Antriebsgehäuse und mit einigen Typen von Gehäusekästen unterschiedliche Bearbeitungsmaschinen zu bauen. Grundsätzlich ist es auch möglich, einen Gehäusekasten oder mehrere Gehäusekästen nur an einer Stirnwand des Antriebsgehäuses anzubringen.

Damit ergibt sich eine Konstruktion, wie sie grundsätzlich aus der DE-OS 32 05 493 bekannt ist. Weiterhin können die an einer Stirnwand des Antriebsgehäuses angebrachten Gehäusekästen identisch ausgebildet sein und ggf. spiegelbildlich zueinander bezüglich einer Symmetrieebene in mittlerer Höhe des Durchgangs angeordnet sein. Dadurch wird, wie ebenfalls schon aus der DE-OS 32 05 493 bekannt, die Zahl der notwendigen Gehäusekästen zum Aufbau der Bearbeitungsmaschine weiter reduziert.

Grundsätzlich ist es möglich, die Gehäusekastenwellen mit Zahnrädern, insbesondere Kegelzahnrädern, zu bestücken und die Bearbeitungseinheiten in Eingriff mit diesen Zahnrädern zu bringen. Bevorzugt wird allerdings eine Lösung dahingehend, daß die Gehäusekastenwellen als Schneckenwellen ausgebildet sind und daß diese Schneckenwellen mit Schneckenrädern zugehöriger Bearbeitungseinheiten in Eingriff stehen.

Wie schon aus der DE-OS 32 05 493 bekannt, ist es möglich, die Schneckenräder in den jeweiligen Gehäusekästen auf Dauer anzubringen, so daß sie ständig in Eingriff mit der Schneckenwelle bleiben. Dementsprechend wird man dann die Schneckenradwellen an jeweils mindestens einem Ende mit einem Trennkupplungselement ausführen, welches die Verbindung mit jeweils einer Antriebswelle einer Bearbeitungseinheit gestattet. Dies bedeutet, daß beim Anbau und Abbau einer Antriebseinheit von einem Gehäusekasten kein Eingriff in die Getriebeteile innerhalb des jeweiligen Gehäusekastens vorgenommen werden muß. Die Gehäusekästen können vielmehr ständig geschlossen bleiben, was auch im Hinblick auf die eventuelle Bereitstellung eines Ölbads innerhalb der Gehäusekästen von Vorteil ist.

Da es, wie eingangs schon erwähnt, schwierig ist, Schneckenwellen großer Länge zu fabrizieren, kann es bei entsprechend großen Längen der Gehäusekästen vorteilhaft sein, als Schneckenwelle ausgebildete Gehäusekastenwellen in eine Mehrzahl von Schneckenwellenabschnitten zu unterteilen, welche an der Unterteilungsstelle gelagert und durch jeweils eine Trennkupplung miteinander verbunden sind. Die Schneckenwellenabschnitte können dabei an ihren Enden zueinander komplementäre Trennkupplungselemente aufweisen, so daß es möglich ist, die jeweils notwendige Schneckenwellenlänge durch Zusammensetzen von kürzeren Schneckenwellenabschnitten genormter Länge zu erhalten.

Der erfindungsgemäße Aufbau der Bearbeitungsmaschine läßt es nach wie vor zu, daß Draht- und Bandvorschub-Einrichtungen und etwa notwendige Stanzpressen jeweils am Maschinenende etwa an den Endkästen angebracht werden. Eine bevorzugte Lösung besteht jedoch darin, daß Stanzpresse und/oder Vorschubeinrichtung an einem Gehäusekasten dort angebracht werden, wo auch eine normale Bearbeitungseinheit angebracht werden könnte, so daß die Antriebsverbindung dann entsprechend der Antriebsverbindung normaler Bearbeitungseinheiten durch Ankuppeln an die jeweilige Gehäusewelle erfolgen kann.

Es soll nicht ausgeschlossen sein, daß an den von dem Antriebsgehäuse abgelegenen Enden der Gehäusekastenwellen Zusatzantriebe vorgesehen werden, um die Gehäusekastenwellen von Drehmomenten noch weiter zu entlasten. Da aber durch die Verkürzung der Gehäusekastenwellen infolge der mittigen Anordnung des Antriebsgehäuses ohnehin schon eine Torsionsentlastung der Gehäusekastenwellen erreicht wird, ist diese sehr teure Zusatzmaßnahme zusätzlicher Antrieb im Regelfall nicht erforderlich.

Wenn erfindungsgemäß an einer ersten Antriebsgehäuse-Stirnwand mindestens ein erster Wellenanschluß und an einer gegenüberliegenden Antriebsgehäuse-Stirnwand mindestens ein zweiter Wellenanschluß, letzterer ggf. in Flucht mit ersterem, angeordnet sind, so können diese Wellenanschlüsse aufgrund der Ausbildung des Verteilergetriebes grundsätzlich gleiche Drehzahl besitzen. Es ist aber auch möglich, einzelne Wellenanschlüsse mit anderer Drehzahl laufen zu lassen, etwa durch Einsatz von zwischengeschalteten untersetzenden oder übersetzenden Zwischengetrieben. Die Änderung des Übersetzungsverhältnisses kann sich für verschiedene Bearbeitungsaufgaben als vorteilhaft erweisen. Ist eine Zwischenwelle vorgesehen, von welcher aus mehrere Verteilerwellen gemeinsam angetrieben sind, und ist diese Zwischenwelle ihrerseits wieder dazu bestimmt und ausgebildet, um Hilfswellen zu treiben, so können auch zwischen der Zwischenwelle und den Hilfswellen drehzahlübersetzende oder drehzahluntersetzende Zwischengetriebe eingebaut werden.

Ist an das Antriebsgehäuse ein Umlenk- und/oder Verteilergehäuse angebaut, so kann in diesem Verteilergehäuse wiederum eine Drehzahluntersetzung oder eine Drehzahlübersetzung stattfinden.

Die beiliegenden Figuren erläutern die Erfindung anhand eines Ausführungsbeispiels. Es stellen dar:
- Fig. 1: eine perspektivische Ansicht einer erfindungsgemäßen Bearbeitungsmaschine;
- Fig. 2: einen Schnitt in der vertikalen Längs-mittelebene der Bearbeitungsmaschine nach Fig. 1 entsprechend der Linie II-II der Fig. 1;
- Fig. 3: eine perspektivische Ansicht eines Antriebsgehäuses der Bearbeitungsmaschine;
- Fig. 4: eine perspektivische Ansicht eines Gehäusekastens der Bearbeitungsmaschine;
- Fig. 5: einen schematischen Teilschnitt nach Linie V-V der Fig. 1;
- Fig. 6: einen Schnitt entsprechend demjenigen der Fig. 5 bei einer geänderten Ausführungsform;
- Fig. 7: eine Kupplungs-Bremskombination zwischen Antriebsmotor und Verteilergetriebe;
- Fig. 8: eine Abwandlung gegenüber Fig. 1;
- Fig. 9: eine Draufsicht zu Fig. 8;
- Fig. 10: ein Band- und Teiletransportschema bei einer Anordnung gemäß Fig. 8 und 9;
- Fig. 11: ein Band- und Teiletransportschema bei einer gegenüber Fig. 8 und 9 weiter abgewandelten Anordnung;
- Fig. 12: eine weitere Abwandlung zu Fig. 1, wiederum mit einem Band- und Teiletransportschema;
- Fig. 13: eine Abwandlung gegenüber Fig. 2, wobei an den beiden Stirnwänden des Antriebsgehäuses unterschiedliche Drehzahlen abgegriffen werden können;
- Fig. 14: eine erste Ausführungsform eines Zwischengetriebes zum Einbau in das Antriebsgehäuse der Fig. 13 und
- Fig. 15: eine zweite Ausführungsform eines Zwischengetriebes zum Einbau in das Antriebsgehäuse der Fig. 13.

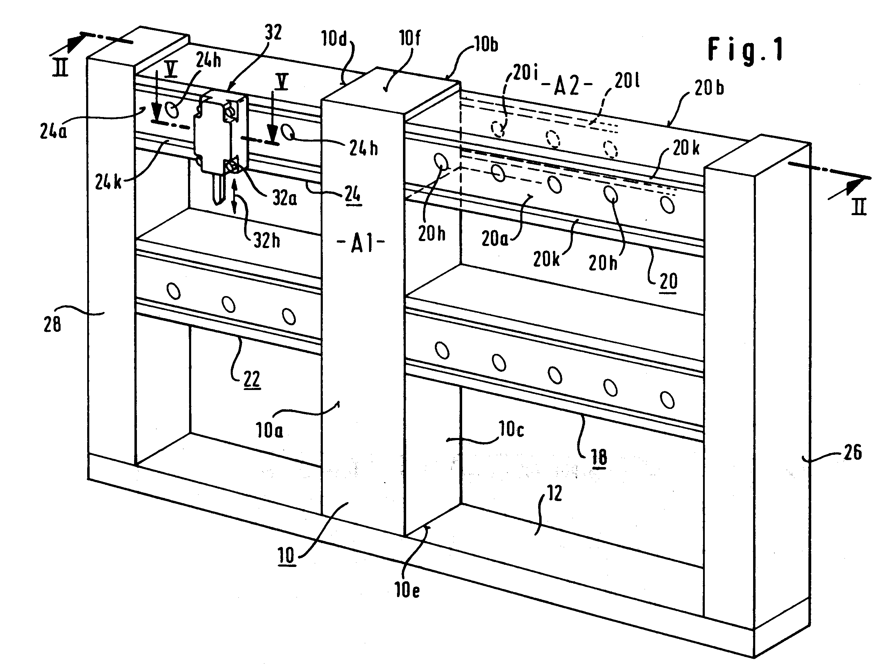

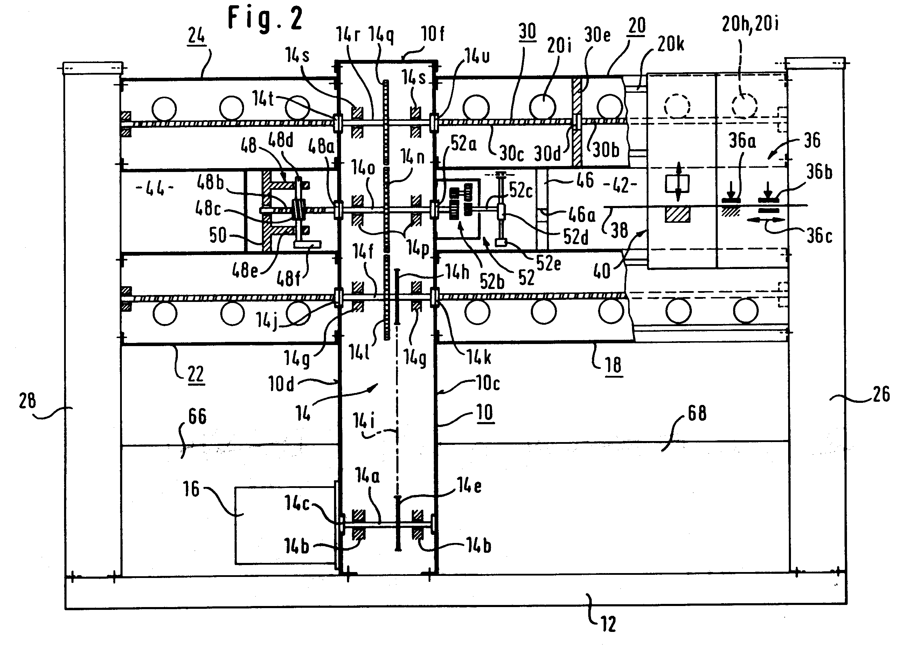

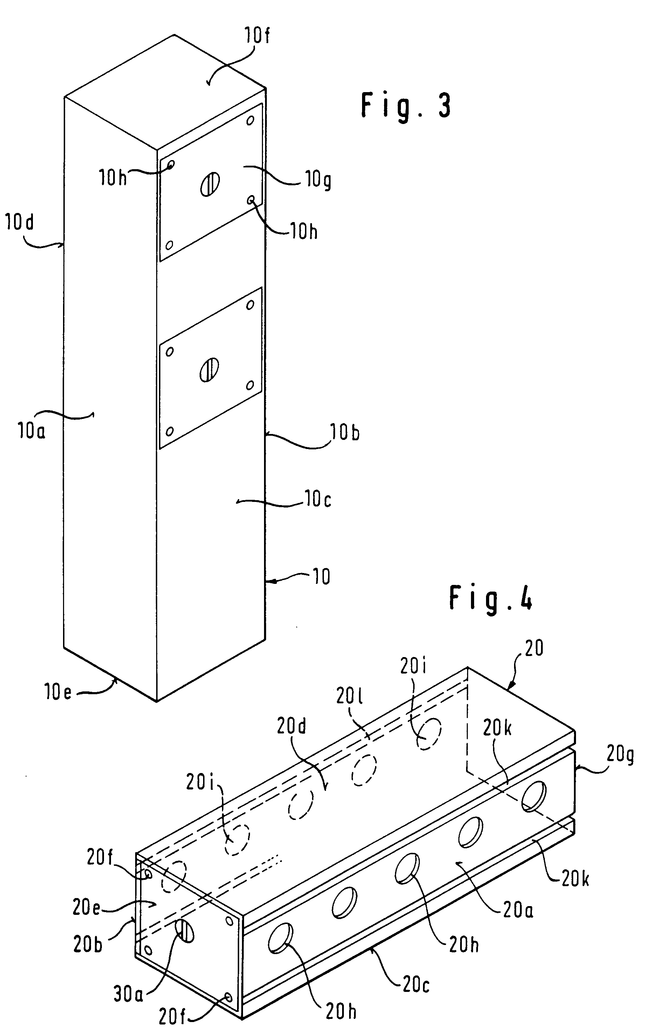

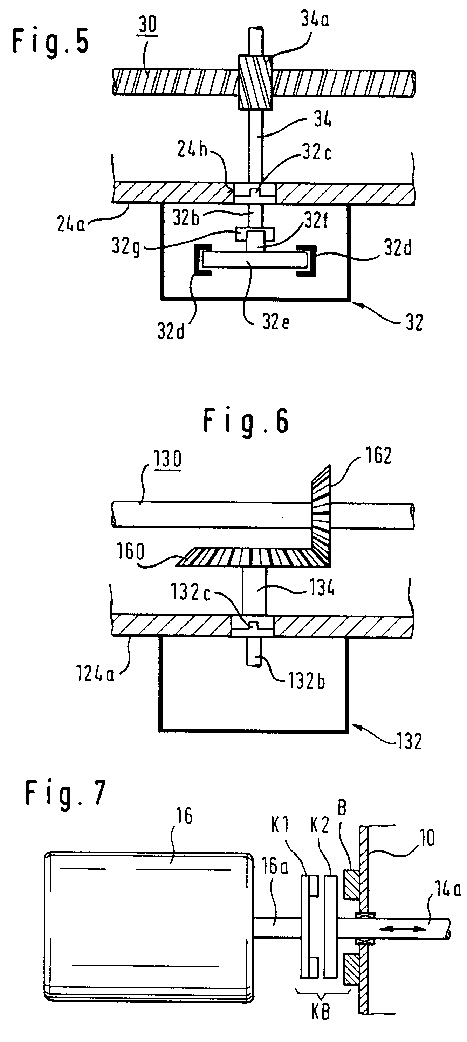

In den Figuren ist mit 10 ein Antriebsgehäuse bezeichnet, das, wie aus Fig. 2 ersichtlich, auf einem Basisträger 12 befestigt, beispielsweise festgeschweißt oder festgeschraubt ist. Dieses Antriebsgehäuse weist, wie aus Fig. 1 und 3 zu ersehen, zwei Sichtwände 10a und 10b und zwei Stirnwände 10c und 10d auf. Ferner weist das Antriebsgehäuse 10 eine Bodenfläche 10e auf, die an dem Basisträger 12 anliegt. Nach oben ist das Antriebsgehäuse 10 durch eine Deckwand 10f abgeschlossen. Innerhalb des Antriebsgehäuses 10 ist, wie aus Fig. 2 ersichtlich, ein Verteilergetriebe 14 untergebracht. Dieses Verteilergetriebe 14 umfaßt eine Eingangswelle 14a, welche in Lagern 14b des Antriebsgehäuses 10 gelagert und mit einem Antriebsmotor 16 verbunden ist, und zwar durch eine Trennkupplung 14c. Zwischen dem Antriebsmotor 16 und der Eingangswelle 14 a kann auch eine Kupplungs-Bremskombination vorgesehen sein, auf die bei der Beschreibung der Fig. 7 noch näher eingegangen wird.

Auf der Eingangswelle 14a sitzt ein Kettenrad 14e.

Weiter weist das Verteilergetriebe 14 eine erste Verteilerwelle 14f auf, die in Lagern 14g des Antriebsgehäuses 10 gelagert ist. Auf der Verteilerwelle 14f sitzt ein Kettenrad 14h, das über eine Kette 14i mit dem Kettenrad 14e verbunden ist. An den beiden Enden der Verteilerwelle 14f sitzen in Öffnungen der Stirnwände 10c und 10d Trennkupplungen 14k,14j. Auf der Verteilerwelle 14f sitzt ferner ein Zahnrad 141. Dieses Zahnrad 141 steht in Eingriff mit einem Zwischenzahnrad 14n, das auf einer Zwischenwelle 14o angeordnet ist. Die Zwischenwelle 14o ist in Lagern 14p des Antriebsgehäuses 10 gelagert. Das Zwischenzahnrad 14n steht in Eingriff mit einem weiteren Zahnrad 14q, das mittels einer oberen Verteilerwelle 14r in Lagern 14s des Antriebsgehäuses 10 gelagert ist und an seinen beiden Enden in Öffnungen der Stirnwände 10c und 10d Trennkupplungen 14t und 14u trägt. An der Stirnwand 10c sind zwei Gehäusekästen 18 und 20 durch Anschrauben oder Anschweißen befestigt. An der Stirnwand 10d sind zwei weitere Gehäusekästen 22,24 durch Anschrauben oder Anschweißen befestigt. Die beiden von dem Antriebsgehäuse 10 abgelegenen Enden der Gehäusekästen 18,20 sind an einem Endkasten 26 durch Anschrauben oder Anschweißen befestigt, der seinerseits auf dem Basisträger 12 durch Anschrauben oder Anschweißen befestigt ist. Entsprechend sind die von dem Antriebsgehäuse 10 abgelegenen Enden der beiden Gehäusekästen 22,24 mit einem Endkasten 28 verschweißt oder verschraubt, der seinerseits auf dem Basisträger 12 verschweißt oder verschraubt ist.

Zum Aufbau eines Gehäusekastens wird nun auf die Darstellung des Gehäusekastens 20 gemäß Fig. 4 verwiesen. Dieser Gehäusekasten 20 weist zwei Gehäusekasten-Sichtwände 20a und 20b und zwei Gehäusekasten-Verbindungswände 20c und 20d auf. Die Gehäusekasten-Sichtwand 20a und die Gehäusekasten-Verbindungswände 20c,20d sind einstückig als U-Teil hergestellt, während die Gehäusekasten-Sichtwand 20b als abnehmbarer Deckel ausgebildet ist. Der Gehäusekasten 20 weist ferner eine Stirnwand-Anschlußfläche 20e zum Anschluß an die Antriebsgehäuse-Stirnwand 10c auf. Als Verbindungsmittel sind schematisch Bohrungen 20f angedeutet, welche zur Aufnahme von Spannbolzen bestimmt sind. An seinem in der Figur rechten Ende weist der Gehäusekasten 20 eine Endkasten-Anschlußfläche 20g auf, die zum Anschluß an dem Endkasten 26 bestimmt ist. Innerhalb des Gehäusekastens 20 ist, wie aus Fig. 2 ersichtlich, eine Schneckenwelle 30 gelagert, von der in Fig. 4 nur das eine, als Trennkupplungselement 30a ausgebildete Ende zu erkennen ist. Dieses Trennkupplungselement 30a bildet ein Bestandteil der in Fig. 2 erkennbaren Trennkupplung 14u.

Wie aus Fig. 2 weiter erkennbar, besteht die Schneckenwelle 30 aus zwei Schneckenwellenabschnitten 30b und 30c, die durch eine Trennkupplung 30d an einer Lagerstelle 30e miteinander verbunden sind und außerdem in Lagern im Bereich der Stirnwand-Anschlußfläche 20e und der Endkasten-Anschlußfläche 20g (Fig. 4) innerhalb des Gehäusekastens 20 gelagert sind. Der Gehäusekasten 20 gemäß Fig. 4 wird an dem Antriebsgehäuse 10 gemäß Fig. 3 in einem Befestigungsbereich 10g befestigt, wobei auch hier wieder Löcher 10h zur schematischen Andeutung der Befestigungsmittel vorgesehen sind. Beim Anbringen des Gehäusekastens 20 an dem Antriebsgehäuse 10 wird die Trennkupplung 14u zwangsläufig geschlossen, beispielsweise dadurch, daß an der Verteilerwelle 14r eine Diametralrippe und an dem Trennkupplungselement 30 gemäß Fig. 4 eine Diametralnut angebracht ist, wobei Diametralrippe und Diametralnut ineinandergreifen.

In den Sichtwänden 20a und 20b des Gehäusekastens 20 sind Öffnungen 20h bzw. 20i vorgesehen.

Die übrigen Gehäusekästen 18,22 und 24 sind analog ausgebildet, wobei im Beispielsfall die Gehäusekästen 18 und 20 jeweils fünf Löcher und die Gehäusekästen 22,24 jeweils drei Löcher haben und die Längen entsprechend unterschiedlich sind.

Die Sichtwände 10a und 20a des Antriebsgehäuses 10 bzw. der Gehäusekasten 20 bilden eine erste Arbeitsebene A1; die Sichtwände 10b und 20b bilden eine zweite Arbeitsebene A2.

An den Sichtwänden 20a und 20b des Gehäusekastens 20 sind T-Nuten 20k und 201 angebracht, welche der Befestigung von Bearbeitungseinheiten dienen. In Fig. 1 erkennt man ein typisches Beispiel für eine Bearbeitungseinheit 32. Diese Bearbeitungseinheit 32 ist dort an der Sichtwand 24a durch Schrauben 32a befestigt, welche in die T-Nuten 24k unter Vermittlung von Nutsteinen eingreifen.

In Fig. 5 erkennt man die Sichtwand 24a und an dieser angebaut die Bearbeitungseinheit 32. Die Bearbeitungseinheit umfaßt eine fest eingebaute drehbare Welle 32b. Diese Welle 32b tritt beim Anbau der Bearbeitungseinheit 32 an der Sichtwand 24a mittels Steckkupplungselementen 32c in Eingriff mit einer Schneckenradwelle 34, die in einer Öffnung 24h der Sichtwand 24a ständig drehbar gelagert ist. Auf der Schneckenradwelle 34 sitzt ein Schneckenrad 34a, das in ständigem Eingriff mit der dem Gehäusekasten 24 zugehörigen Schneckenwelle steht, die analog den Verhältnissen im Gehäusekasten 20 auch hier mit 30 bezeichnet ist. In der Bearbeitungseinheit 32 ist eine Führung 32d vorgesehen, in der ein Werkzeugschlitten 32e senkrecht zur Zeichenebene der Fig. 5 verschiebbar gelagert ist. Dieser Werkzeugschlitten 32e trägt einen Nockenfolger 32f, der in ständigem Eingriff mit einem Antriebsnocken 32g gehalten ist. Der Antriebsnocken 32g ist mit der Antriebswelle 32b zur gemeinsamen Umdrehung verbunden, so daß durch die von der Schnecke 30 abgeleitete Drehbewegung des Antriebsnockens 32g eine Auf- und Abbewegung des Werkzeugschlittens 32e in Pfeilrichtung 32h der Fig. 1 abgeleitet wird.

Sämtliche Öffnungen 20h und 20i des Gehäusekastens 20 sind mit Schneckenwellen entsprechend der Schneckenwelle 34 der Fig. 5 besetzt. Das gleiche gilt für die übrigen Gehäusekästen 18, 22 und 24. Es kann also an jeder Öffnung jedes Gehäusekastens jederzeit eine Bearbeitungseinheit 32 befestigt und antriebsmäßig an die jeweilige Schneckenwelle 30 angekuppelt werden. Die Gehäusekästen 18, 20, 22 und 24 sind durch die in den Öffnungen 20h und 20i gelagerten Schneckenradwellen 34 dicht abgeschlossen, so daß die Gehäusekästen 18 - 24 jeweils mit einem Ölbad gefüllt sein können. Diese Ölbäder können in Verbindung mit einem Ölbad des Antriebsgehäuses 10 stehen.

An dem Gehäusekasten 20 ist gemäß Fig. 2 eine Vorschubeinheit 36 angebracht. Diese Vorschubeinheit 36 wird durch einen Antrieb angetrieben, wie er in Fig. 5 für eine Bearbeitungseinheit dargestellt ist. Die Vorschubeinheit umfaßt eine periodisch öffnende und schließende stationäre Zange 36a und eine periodisch öffnende und schließende bewegliche Zange 36b. Die Zange 36b ist in Pfeilrichtung 36c periodisch hin- und hergehend angetrieben. Die Arbeitsweise der Vorschubeinheit 36 ist wie folgt: Das Draht- oder Bandmaterial 38 (siehe Fig. 2) wird zunächst von der Zange 36b erfaßt und nach links vorgeschoben. Dann schließt die Zange 36a und hält das Material 38 fest. Hierauf öffnet die Zange 36b und bewegt sich nach rechts. Hat die Zange 36b ihre rechte Endstellung erreicht, so schließt sie wieder. Dann wird die Zange 36a geöffnet, und die Zange 36b kann sich wieder nach links bewegen unter Mitnahme des Materials 38 um einen Vorschubschritt definierter Länge.

Weiterhin ist gemäß Fig. 2 an dem Gehäusekasten 20 eine Stanzpresse 40 angebracht. Diese Stanzpresse 40 wird wiederum an dem Gehäusekasten 20 genauso befestigt wie die Bearbeitungseinheit 32 gemäß Fig. 1 und genauso angetrieben wie diese (siehe Fig. 5). Durch die Stanzpresse 40 kann das von der Vorschubeinrichtung 36 schrittweise vorgeschobene Draht- oder Bandmaterial 38 vorgestanzt und ggf. in einzelne Werkstücke unterteilt werden. Wird das Draht- oder Bandmaterial in einzelne Werkstücke unterteilt, so ist für den weiteren Transport von der Stanzpresse 40 nach links (Fig. 2) eine besondere Transportvorrichtung notwendig, die nicht eingezeichnet ist.

Es sei nun angenommen, daß das Draht- oder Bandmaterial 38 gemäß Fig. 2 vor der Bearbeitungsebene A1 zunächst bewegt und bearbeitet wird. Hierzu kann an jeder Öffnung der Gehäusekästen 18,20,22,24 je eine Bearbeitungseinheit vorgesehen sein (siehe Bearbeitungseinheit 32 der Fig. 1). Die Bearbeitungseinheiten können beliebiger Art sein und bestimmt sein zum Biegen, Stanzen, Bohren, Gewindebohren, Schweißen. Weiterhin können Bearbeitungseinheiten vorgesehen sein, die dazu bestimmt und geeignet sind, einzelne aus dem Draht- und Bandmaterial gebildete Werkstücke mit Zusatzelementen zusammenzufügen, die durch eine nicht dargestellte weitere Zuführung herangeführt werden können.

Wenn ausgehend vom rechten Bereich der Fig. 2 ein Werkstück nach dem linken Endbereich der Fig. 2 vorbewegt worden ist und die Bearbeitungsschritte durch die in der Bearbeitungsebene A1 vorgesehenen Bearbeitungseinheiten beendet sind, kann das jeweilige Werkstück zwischen den beiden Gehäusekästen 22 und 24 hindurchbewegt werden und damit in den Bereich der zweiten Bearbeitungsebene A2 gelangen. Dort können entsprechende Bearbeitungsschritte durchgeführt werden. Insbesondere ist an die Möglichkeit gedacht, im Bereich der 1. Bearbeitungsebene A1 die mechanischen Bearbeitungen an den Werkstücken durchzuführen und im Bereich der Bearbeitungsebene A2 Montagevorgänge durchzuführen, insbesondere die in der Bearbeitungsebene A1 bearbeiteten Werkstücke mit Zusatzkomponenten zu verbinden, welche durch eine nicht dargestellte Zuführeinrichtung zur Bearbeitungsebene A2 zugeführt werden.

Der Übergang von der Bearbeitungsebene A1 in die Bearbeitungsebene A2 kann auch zwischen den beiden Gehäusekästen 18 und 20 erfolgen. Der Zwischenraum zwischen den Gehäusekästen 18 und 20 ist mit 42 bezeichnet, der Zwischenraum zwischen den Gehäusekästen 22 und 24 ist mit 44 bezeichnet.

Nachzutragen ist noch, daß zur Bearbeitung der Werkstücke die Zwischenräume 42 und 44 auch durch Überbrückungsstücke 46 überbrückt sein können, an denen Widerlager 46a angebracht sind, so daß die jeweilige Bearbeitungseinheit mit einem festen Widerlager zusammenarbeiten kann.

Für den Transport durch den Durchgang 44 hindurch ist ein Transportmechanismus 48 vorgesehen. Dieser Transportmechanismus wird durch die Zwischenwelle 14o angetrieben. Am linken Ende dieser Zwischenwelle 14o befindet sich eine Trennkupplung 48a, welche mit einer Zusatzschneckenwelle 48b kuppelbar ist, welche dem Transportmechanismus angehört. Die Schneckenwelle 48b ist in einem Verbindungsstück 50 zwischen den beiden Gehäusekästen 22 und 24 drehbar gelagert. Sie steht mit einem Schneckenrad 48c in Eingriff, das durch eine vertikal verlaufende Schneckenradwelle 48d getragen ist. Die Schneckenradwelle 48d ist in Lagern 48e an dem Verbindungsstück 50 gelagert und trägt an ihrem unteren Ende einen Nocken oder eine Exzenterscheibe 48f, der mittelbar oder unmittelbar den Quertransport von Werkstücken durch den Durchgang 44 hindurch bewirken kann.

Bezüglich des Transportmechanismus 48 ist zu beachten, daß dieser dank der Verwendung der Schneckenwelle 48b in der gleichen Weise untersetzt angetrieben ist wie die Bearbeitungseinheit 32 und damit im Takt der Bearbeitung den Quertransport durch den Durchgang 44 übernehmen kann. Die Schneckenwellen 30 und 48b laufen mit einer verhältnismäßig großen Drehzahl, während die Schneckenradwellen 34 und 48d mit einer stark untersetzten geringeren Drehzahl umlaufen. Dies ist bedeutsam, um einen gegebenen Leistungsbedarf an der jeweiligen Bearbeitungsstelle mit geringem Torsionsmoment in den Schneckenwellen 30 übertragen zu können.

Zu beachten ist auch, daß die beiden Zahnräder 141 und 14q sich im gleichen Drehsinn drehen, so daß auch insofern die von den oberen und unteren Schneckenwellen angetriebenen Bearbeitungseinheiten leicht aufeinander abgestimmt werden können.

An der rechten Stirnwand 10c des Antriebsgehäuses 10 ist ein alternativer Transportmechanismus 52 dargestellt. Hier ist an die Zwischenwelle 14o wiederum über eine Trennkupplung 52a ein Zahnrad-Untersetzungsgetriebe 52b angebracht, das eine Nockenwelle 52c treibt. Die Nockenwelle 52c trägt einen Nocken 52d, der auf einen Schwenkhebel 52e einwirkt. Der Schwenkhebel 52e führt Pendelbewegungen in einer zur Zeichenebene senkrechten vertikalen Ebene aus und kann wiederum dem Transport von Werkstücken zwischen den Bearbeitungsebenen A1 und A2 dienen.

Die bei 48 und 52 dargestellten Einrichtungen, die bisher beispielshalber als Transportmechanismen bezeichnet wurden, können nicht nur für den Transport verwendet werden, sondern auch und vorzugsweise für andere Bewegungen senkrecht zu den beidseitigen Bearbeitungsebenen, insbesondere zum Antrieb von Bearbeitungswerkzeugen.

Es ist auch möglich, die Wellen 48b bzw. 52c in Längsrichtung der Gehäusekästen zu verlängern, so daß mehrere Bewegungen senkrecht zu den Bearbeitungsebenen A1 und A2 an beliebigen Stellen längs der Gehäusekästen erzeugt werden können.

In Fig. 6 ist ein alternativer Antrieb für eine Bearbeitungseinheit 132 dargestellt. Die Bearbeitungseinheit 132 ist an einer Sichtwand 124a befestigt. Innerhalb der Bearbeitungseinheit 132 ist eine Welle 132b gelagert, die durch eine Trennkupplung 132c in Antriebsverbindung mit einer Welle 134 steht. Die Welle 134 trägt ein Kegelrad 160, das mit einem weiteren Kegelrad 162 auf einer Welle 130 steht. Die Welle 130 ersetzt in diesem Fall die Schneckenwelle 30. Das Untersetzungsverhältnis zwischen der Welle 130 und der Welle 134 durch die Kegelräder 160 und 162 ist dabei entsprechend der zeichnerischen Darstellung wieder so gewählt, daß die Welle 134 wesentlich langsamer umläuft als die Welle 130, z. B. mit einer im Verhältnis 1 : 4 untersetzten Drehzahl, so daß auch hier eine gegebene Leistung durch die Welle 130 mit großer Drehzahl und dementsprechend kleinem Drehmoment übertragen werden kann.

Zur Erleichterung der Einstellung der Bearbeitungseinheiten empfiehlt es sich, die Wellen 34 bzw. 134 (Fig. 5 und 6) jeweils so einzustellen, daß die zugehörigen Trennkupplungen 32c und 132c in jedem Augenblick übereinstimmende Winkellagen einnehmen.

Der Basisträger 12 (Fig. 2) ist jeweils an die Länge der Gehäusekästen 18 - 24 angepaßt und bestimmt eindeutig die Gesamtlänge der Bearbeitungsmaschine. Zwischen dem Antriebsgehäuse 10 und den Endkästen 26, 28 können Zwischenkästen 66, 68 eingebaut sein, die der Länge der jeweils verwendeten Gehäusekästen entsprechen und mit dem Antriebsgehäuse 10 und den Endkästen 26, 28 verschweißt oder verschraubt sind.

In Fig. 7 erkennt man den bereits in Fig. 2 dargestellten Antriebsmotor 16, einen Teil des Getriebegehäuses 10 und die Eingangswelle 14a. Zur Verbindung des Antriebsmotors 16 mit der Eingangswelle 14a dient hier eine Kupplungs-Bremskombination KB. Diese Kupplungs-Bremskombination umfaßt eine erste Kupplungsscheibe K1 an der Motorwelle 16a und eine zweite Kupplungsscheibe K2 auf der Eingangswelle 14a. An dem Antriebsgehäuse 10 ist ferner eine Bremsscheibe B stationär angebracht. Durch Verschieben der Kupplungsscheibe K2 kann wahlweise das Verteilergetriebe 14 in Antrieb versetzt oder gebremst werden. Auf diese Weise ist es möglich, das Verteilergetriebe und damit auch alle Bearbeitungseinheiten und sonstigen Peripherie-Geräte rasch zum Stillstand zu bringen, wenn irgendwo eine Betriebsstörung festgestellt werden sollte.

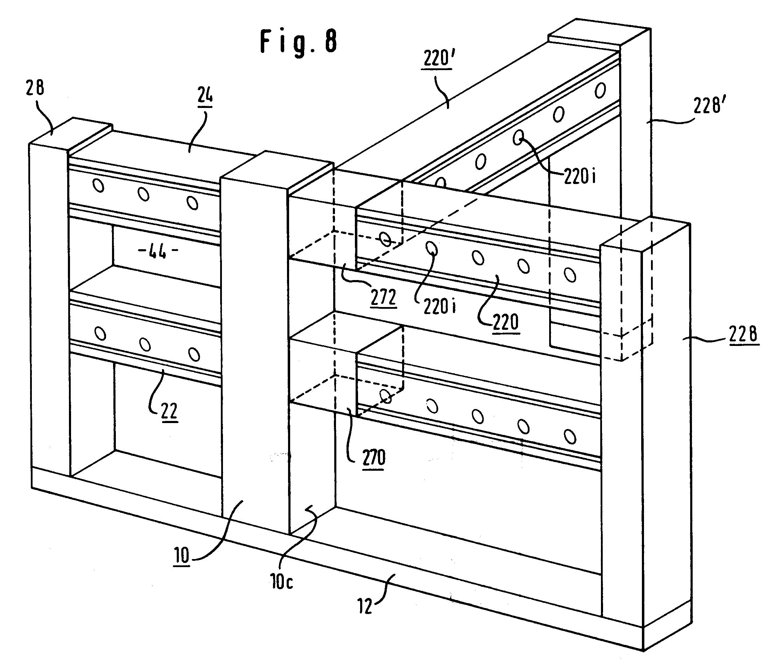

In Fig. 8 erkennt man eine Abwandlung gegenüber der Ausführungsform nach den Fig. 1 und 2. Analoge Teile sind mit gleichen Bezugszeichen versehen wie in Fig. 1. Man erkennt in Fig. 8 wieder das Antriebsgehäuse 10, und man erkennt auch, daß der Aufbau in Fig. 8 zur Linken des Antriebsgehäuses 10 mit dem Aufbau in Fig. 1 zur Linken des dortigen Antriebsgehäuses 10 übereinstimmt. Das Antriebsgehäuse 10 und das in Fig. 8 nicht dargestellte Verteilergetriebe sind genauso ausgebildet wie in den Fig. 1 und 2. Abweichend von der Ausbildung nach Fig. 1 und 2 sind aber nun an der Stirnwand 10c nicht unmittelbar Gehäusekästen angebracht, sondern Umlenkgehäuse 270 und 272. Die Umlenkgehäuse 270 und 272 sind miteinander identisch, so daß es genügt, eines von ihnen zu beschreiben.

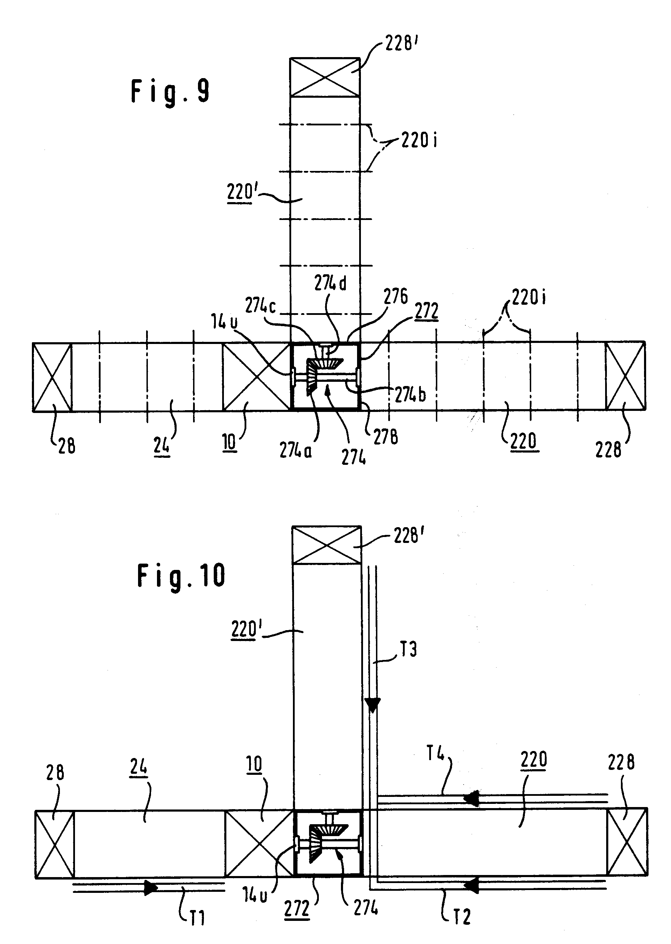

In der Draufsicht gemäß Fig. 9 erkennt man das Antriebsgehäuse 10 wieder und auch einen schematischen Schnitt durch das Umlenkgehäuse 272. Das Umlenkgehäuse 272 nimmt ein Umlenkgetriebe 274 auf. Im Beispielsfalle handelt es sich um ein Kegelradgetriebe 274 mit einem ersten Kegelrad 274a auf einer ersten Kegelradwelle 274b und einem zweiten Kegelrad 274c auf einer zweiten Kegelradwelle 274d.

Das Umlenkgehäuse 272 ist an dem Antriebsgehäuse 10 genauso befestigt, wie in Fig. 1 der Gehäusekasten 20 an dem Antriebsgehäuse 10 befestigt ist. Ferner ist die erste Kegelradwelle 274b gemäß Fig. 8 und 9 genauso an die Verteilerwelle 14r (in Fig. 2 dargestellt) angekuppelt, wie in Fig. 2 die Schneckenwelle 30 an die Verteilerwelle 14r angekuppelt ist. Es ist deshalb auch in Fig. 9 eine Trennkupplung 14u eingezeichnet.

Das Umlenkgehäuse 272 weist mindestens zwei Anschlußwände 276 und 278 auf. An diese Anschlußwände können Gehäusekästen 220 und 220' angeschlossen sein. Die Gehäusekästen 220 und 220' sind analog aufgebaut wie etwa der Gehäusekasten 20 aus der Ausführungsform nach den Fig. 1 und 2. Dies gilt insbesondere für die Anschlußflächen, mit denen die Gehäusekästen 220 und 220' ausgeführt sind, so daß die Gehäusekästen 220 und 220' auch unmittelbar an das Antriebsgehäuse 10 angeschlossen sein könnten, so wie in Fig. 2 dargestellt. Auch in den Gehäusekästen 220 und 220' sind Schneckenwellen (nicht dargestellt) gelagert, genauso wie in Fig. 2 dargestellt. In den Gehäusekästen sind durch strichpunktierte Linien angedeutete Bohrungen 220i vorgesehen, und zwar in zwei einander gegenüberliegenden Sichtwänden. Gemäß Fig. 8 und 9 ist an den linken Enden der Gehäusekästen 22 und 24 in Übereinstimmung mit Fig. 2 ein Endkasten 28 angebracht. An den freien Enden der Gehäusekästen 220 und 220' sind weitere Endkästen 228 und 228' angebracht, die genauso ausgebildet sein können wie die Endkästen 28. In Fig. 8 sind zu dem unteren Umlenkgehäuse 270 keine zugehörigen Gehäusekästen gezeichnet.

Es ist aber ohne weiteres verständlich, daß auch an das Umlenkgehäuse 270 Gehäusekästen angeschlossen werden können, so wie an das Umlenkgehäuse 272.

In Fig. 10 sind Transportbahnen T1, T2, T3 und T4 für Draht- und Bandmaterial, aber auch für Werkstücke oder Werkstückteile dargestellt. Die Pfeile deuten beispielsweise Transportrichtungen an. Es wird dabei davon ausgegangen, daß die Transportbahnen auf der Höhe des Zwischenraums 44 (Fig. 8) verlaufen und damit zwischen den oberen und unteren Gehäusekästen hindurchgehen können. Damit ist möglich, in verschiedenen Richtungen Draht- oder Bandmaterial zuzuführen, ggf. auch Einzelteile, und in anderen Richtungen die bearbeiteten und zusammengebauten Werkstücke abzuführen.

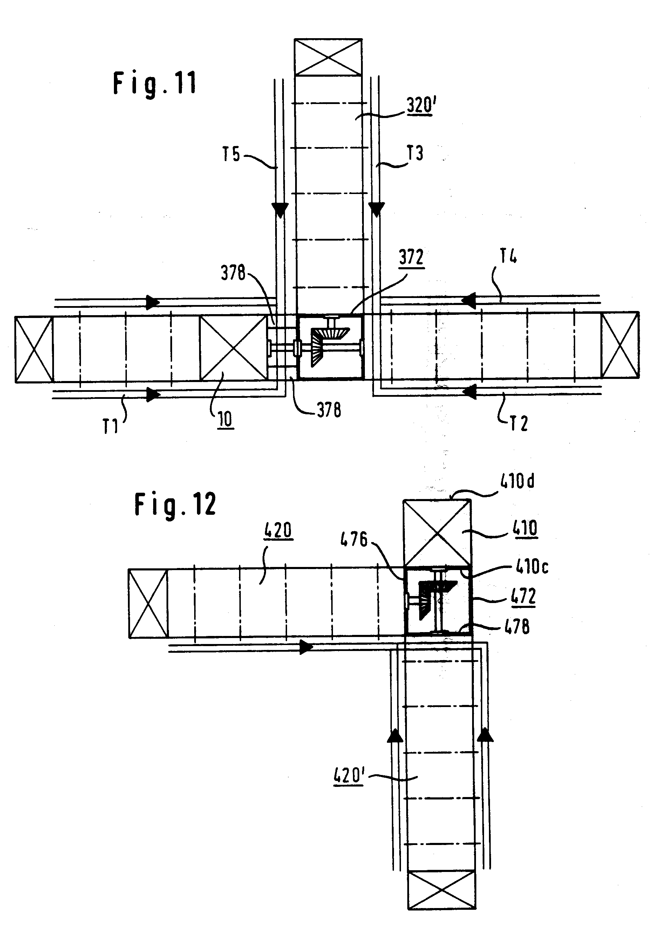

In Fig. 11 ist eine Abwandlung gegenüber den Fig. 8 - 10 dargestellt. Die Abwandlung besteht darin, daß das Umlenkgehäuse 372 nicht unmittelbar mit dem Antriebsgehäuse 10 verbunden ist, sondern unter Vermittlung von Distanzstücken 378. Im übrigen entspricht die Anordnung nach Fig. 11 derjenigen nach den Fig. 8 - 10. Die Anordnung der Distanzstücke 378 gestattet die Bildung einer weiteren Transportbahn T5 entlang der in Fig. 11 linken Begrenzungsebene des Gehäusekastens 320' und des Umlenkgehäuses 372.

In Fig. 12 schließlich erkennt man, daß man an einem Antriebsgehäuse 410 auf nur einer Seite ein oder mehrere Umlenkgehäuse 472 anbringen kann und dann an zwei Seitenwänden 476,478 des Umlenkgehäuses 472 je einen Gehäusekasten 420 bzw. 420'. Das Umlenkgehäuse 472 ist hier an einer Stirnwand 410c des Antriebsgehäuses 410 angebracht, während an der Stirnwand 410d keine Anbauten vorhanden sind. Trotzdem kann das Antriebsgehäuse 410 genauso ausgebildet sein, wie in Fig. 11 dargestellt.

Auch in Fig. 12 sind mögliche Transportbahnen für Draht- und Bandmaterial sowie für Komponenten und fertige Werkstücke durch Pfeile angedeutet.

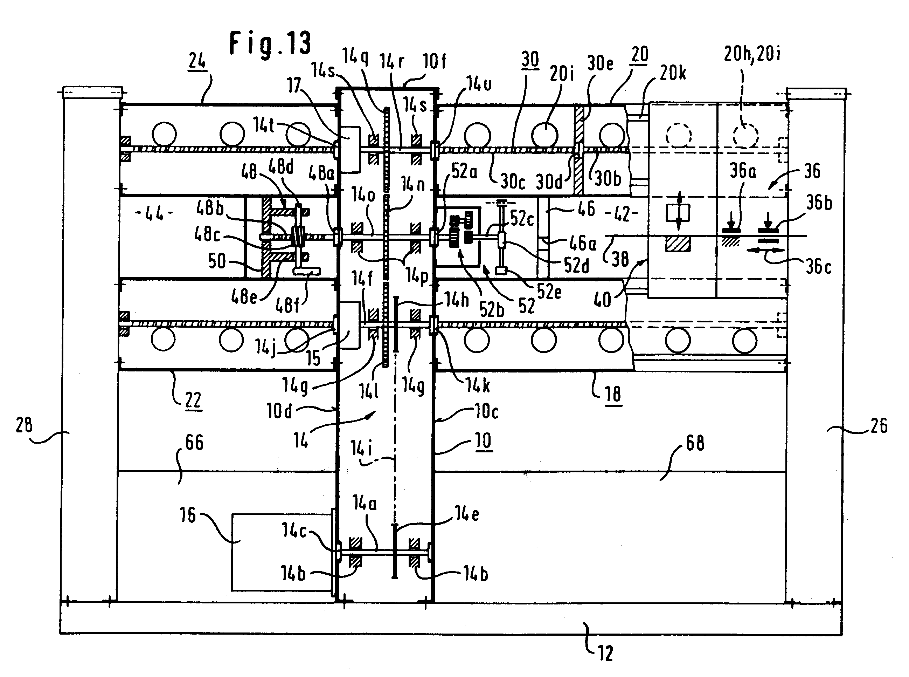

Die Ausführungsform der Fig. 13 entspricht im wesentlichen der Ausführungsform nach Fig. 2. In Abwandlung gegenüber der Ausführungsform nach Fig. 2 können an den Wellenanschlüssen (Trennkupplungen) 14j und 14t andere Drehzahlen abgegriffen werden als an den Wellenanschlüssen (Trennkupplungen) 14k und 14u. Dies bedeutet, daß die Schneckenwellen in den links liegenden Gehäusekästen 22 und 24 mit anderen, geringeren oder größeren, Drehzahlen angetrieben werden können als die Schneckenwellen in den Gehäusekästen 18 und 20. Zu diesem Zwecke sind in Fig. 13 Zwischengetriebe 15 und 17 vorgesehen. Die Zwischengetriebe 15 und 17 sind eingangsseitig jeweils mit einer Verteilerwelle 14f bzw. 14r verbunden und ausgangsseitig mit je einer Trennkupplung 14j bzw. 14t.

Auf diese Weise wird beispielsweise die Durchführung folgender Bearbeitungsaufgabe ermöglicht: auf der rechten Seite der Maschine in Fig. 13 werden einzelne Platinen, z. B. 100 Stück pro Minute, fabriziert. Diese Platinen werden in Pakete von jeweils 5 Stück zusammengefaßt und auf die linke Maschinenhälfte transportiert. Die linke Maschinenhälfte hat dann die Aufgabe, die einzelnen Platinen der jeweils 5 Platinen umfassenden Pakete untereinander zu verbinden. Hierzu ist auf der linken Maschinenhälfte ein langsameres Arbeiten notwendig. Man kann hierzu die Schneckenwellen auf der linken Seite der Maschine mit 1/5 der Drehzahlen umlaufen lassen, mit denen die Schneckenwellen auf der rechten Seite der Maschine umlaufen.

Grundsätzlich könnte man sämtliche 4 Schneckenwellen der Fig. 13 jeweils mit unterschiedlichen Drehzahlen umlaufen lassen.

Die Drehzahlen der Hilfswellen 52c und 48b können den unterschiedlichen Drehzahlen der zugehörigen Schneckenwellen wiederum durch entsprechende Übersetzungsverhältnisse oder Untersetzungsverhältnisse angepaßt werden. Z. B. kann man das Stirnradgetriebe 52b gemäß Fig. 13 als Untersetzungsgetriebe oder Übersetzungsgetriebe ausbilden.

Der Gedanke, einzelne Schneckenwellen mit unterschiedlichen Drehzahlen anzutreiben, läßt sich auch bei den Maschinenkonstruktionen nach den Fig. 9 und 10 anwenden. So kann man das Kegelradgetriebe 274 in Fig. 9 und 10 auch als Untersetzungsgetriebe oder Übersetzungsgetriebe ausbilden.

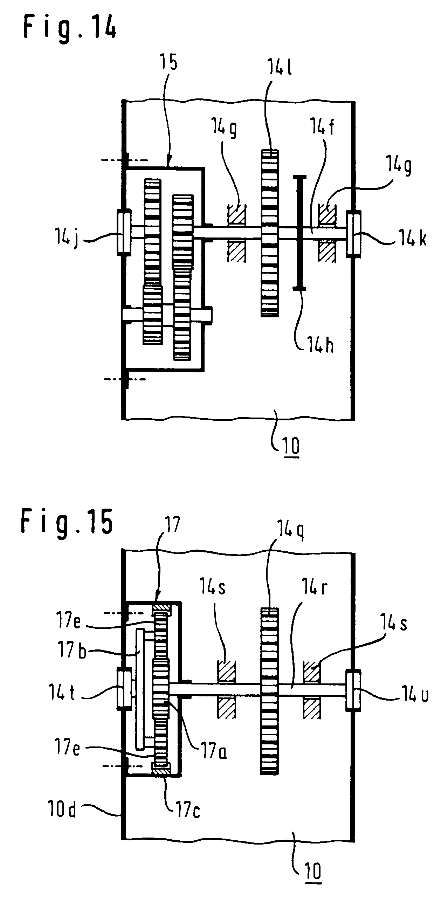

In Fig. 14 erkennt man Einzelheiten des Untersetzungsgetriebes 15. Dieses Untersetzungsgetriebe 15 ist als Stirnradgetriebe ausgebildet, welches von einer Verteilerwelle 14f her angetrieben wird und die Trennkupplung 14j mit einer von der Drehzahl der Verteilerwelle 14f abweichenden Drehzahl antreibt.

In Fig. 15 erkennt man ein als Planetengetriebe 17 ausgebildetes Zwischengetriebe 17. Hier treibt die Verteilerwelle 14r das Sonnenrad 17a, während der Planetenradträger 17b die Trennkupplung 14t antreibt. Das Ringrad 17c ist an der Stirnwand 10d angeflanscht. Die Planetenräder 17e stehen in Zahneingriff mit dem Sonnenrad 17a und dem Ringrad 17c.

## Patentansprüche

1. Bearbeitungsmaschine umfassend eine Antriebseinheit mit einem Antriebsgehäuse (10) und mit einem innerhalb des Antriebsgehäuses (10) untergebrachten, an einen Antriebsmotor (16) angeschlossenen Verteilergetriebe (14),
wobei das Antriebsgehäuse (10) zwei einander gegenüberliegende und zueinander parallele Antriebsgehäuse-Stirnwände (10c,10d) und mindestens eine zu den Antriebsgehäuse-Stirnwänden (10c,10d) orthogonal verlaufende Antriebsgehäuse-Sichtwand (10a) aufweist,
wobei weiter das Verteilergetriebe (14) in einer ersten Antriebsgehäuse-Stirnwand (10c) mindestens einen ersten Wellenanschluß (14k,14u) mit zur ersten Antriebsgehäuse-Stirnwand (10c) orthogonaler Drehachse aufweist,
wobei weiter diese erste Antriebsgehäuse-Stirnwand (10c) im Umgebungsbereich des mindestens einen Wellenanschlusses (14k,14u) zum Anbau eines ersten Gehäusekastens (18,20) ausgebildet ist,
wobei weiter dieser erste Gehäusekasten (18,20) eine Stirnwand-Anschlußfläche (20e) zum Anschluß an die erste Antriebsgehäuse-Stirnwand (10c) und mindestens eine zu der Antriebsgehäuse-Sichtwand (10a,10b) parallel verlaufende Gehäusekasten-Sichtwand (20a,20b) aufweist, wobei weiter in dem ersten Gehäusekasten (18,20) mindestens eine zum Anschluß an den mindestens einen ersten Wellenanschluß (14k,14u) bestimmte und geeignete, mit ihrer Achse zu der ersten Stirnwand-Anschlußfläche (20e) orthogonal verlaufende Gehäusekastenwelle (30) gelagert ist,
wobei weiter an der Gehäusekasten-Sichtwand (20a,20b) mindestens eine Befestigungsstelle für eine Bearbeitungseinheit (32) vorgesehen ist und ferner in der Gehäusekasten-Sichtwand (20a,20b) mindestens eine Öffnung (20h,20i) zur Herstellung einer Antriebsverbindung zwischen der Bearbeitungseinheit (32) und der Gehäusekastenwelle (30) vorgesehen ist,
dadurch gekennzeichnet,
daß das Verteilergetriebe (14) in der zweiten Antriebsgehäuse-Stirnwand (10d) mindestens einen zweiten Wellenanschluß (14j,14t) mit zu dieser Antriebsgehäuse-Stirnwand (10d) orthogonaler Drehachse aufweist und daß diese zweite Antriebsgehäuse-Stirnwand (10d) zum Anschluß eines weiteren getriebemittelaufnehmenden Gehäuses, insbesondere eines dem ersten Gehäusekasten (18,20) im wesentlichen entsprechenden zweiten Gehäusekastens (22,24), im Umgebungsbereich des mindestens einen zweiten Wellenanschlusses (14j,14t), ausgebildet ist.

2. Bearbeitungsmaschine nach Anspruch 1,
dadurch gekennzeichnet,
daß ein erster Wellenanschluß (14k) in der ersten Antriebsgehäuse-Stirnwand (10c) und ein zweiter Wellenanschluß (14j) in der zweiten Antriebsgehäuse-Stirnwand (10d) in axialer Flucht zueinander angeordnet sind und daß zu dem ersten (14d) und zu dem zweiten (14j) Wellenanschluß gehörige Gehäusekästen (18,22) an den zugehörigen Antriebsgehäuse-Stirnwänden (10c,10d) derart anbringbar sind, daß sie in Achsrichtung der zugehörigen Gehäusekastenwellen (30) miteinander fluchten.

3. Bearbeitungsmaschine nach einem der Ansprüche 1 und 2,
dadurch gekennzeichnet,
daß an der ersten (10c) und der zweiten (10d) Antriebsgehäuse-Stirnwand jeweils zwei erste (14k,14u) bzw. zweite (14j,14t) Wellenanschlüsse in Abstand voneinander vorgesehen sind, wobei jeweils ein erster (14k,14u) und ein zweiter (14j,14t) Wellenanschluß miteinander fluchten und im bereich beider Wellenanschlüsse (14k,14u,14j,14t) beider Antriebsgehäuse-Stirnwände (10c,10d) jeweils ein Gehäusekasten (18,20,22,24) anbringbar ist.

4. Bearbeitungsmaschine nach einem der Ansprüche 1 - 3,
dadurch gekennzeichnet,
daß die Gehäusekasten-Sichtwände (20a,20b) des ersten (18,20) und ggf. des zweiten Gehäusekastens (22,24) im wesentlichen bündig zu der jeweiligen Antriebsgehäuse-Sichtwand (10a,10b) liegen.

5. Bearbeitungsmaschine nach einem der Ansprüche 1 - 4,
dadurch gekennzeichnet,
daß das Antriebsgehäuse (10) eine weitere zu der Antriebsgehäuse-Sichtwand (10a) parallel verlaufende und von dieser beabstandete Antriebsgehäuse-Sichtwand (10b) aufweist.

6. Bearbeitungsmaschine nach Anspruch 5,
dadurch gekennzeichnet,
daß die Gehäusekästen (18 bis 24) jeweils eine weitere zu der weiteren Antriebsgehäuse-Sichtwand (10b) parallel verlaufende Gehäusekasten-Sichtwand (20b) aufweisen, daß auch diese weiteren Gehäusekasten-Sichtwände (20b) jeweils mindestens eine Befestigungsstelle und eine Öffnung (20i) für eine Bearbeitungseinheit (32) aufweisen und daß die weiteren Gehäusekasten-Sichtwände (20b) im wesentlichen bündig mit der weiteren Antriebsgehäuse-Sichtwand (10b) liegen.

7. Bearbeitungsmaschine nach einem der Ansprüche 1 - 6,
dadurch gekennzeichnet,
daß die Gehäusekästen (18 bis 24) an ihren von den Stirnwand-Anschlußflächen (20e) abgelegenen Enden jeweils eine Endkasten-Anschlußfläche (20g) zum Anschluß an jeweils einer Stirnwand eines Endkastens (26,28) aufweisen.

8. Bearbeitungsmaschine nach einem der Ansprüche 1 - 7,
dadurch gekennzeichnet,
daß die Gehäusekästen (18 bis 24) in einer zu der jeweiligen Wellenachsrichtung senkrechten Schnittebene betrachtet einen im wesentlichen rechteckigen Umriß besitzen, welcher durch jeweils zwei zueinander parallele und voneinander beabstandete Sichtwände (20a,20b) und jeweils zwei diese Sichtwände (20a,20b) verbindende Verbindungswände (20c,20d) gebildet ist.

9. Bearbeitungsmaschine nach Anspruch 8,
dadurch gekennzeichnet,
daß die einander benachbarten Verbindungswände (20d,20c) von zwei an ein und derselben Antriebsgehäuse-Stirnwand (10c) angebrachten Gehäusekästen (18,20) zwischen sich mindestens einen Durchgang (42) bilden.

10. Bearbeitungsmaschine nach einem der Ansprüche 1 - 9,
dadurch gekennzeichnet,
daß das Antriebsgehäuse (10) und ggf. ein oder zwei Endkästen (26,28) jeweils als vertikale Standsäule ausgebildet sind.

11. Bearbeitungsmaschine nach Anspruch 10,
dadurch gekennzeichnet,
daß an mindestens einer Antriebsgehäuse-Stirnwand (10c,10d) des Antriebsgehäuses (10) zwei Gehäusekästen (18,20,22,24) übereinander angeordnet sind.

12. Bearbeitungsmaschine nach einem der Ansprüche 1 - 11,
dadurch gekennzeichnet,
daß das Antriebsgehäuse (10) und ggf. die Endkästen (26,28) auf einem Grundträger (12) angeordnet sind.

13. Bearbeitungsmaschine nach einem der Ansprüche 1 - 12,
dadurch gekennzeichnet,
daß das Verteilergetriebe (14) mindestens eine Verteilerwelle (14f,14r) aufweist, welche von der ersten (10c) zur zweiten Antriebsgehäuse-Stirnwand (10d) durchgehend einen ersten Wellenanschluß (14k,14u) und einen zweiten Wellenanschluß (14j,14t) miteinander verbindet.

14. Bearbeitungsmaschine nach Anspruch 13,
dadurch gekennzeichnet,
daß das Verteilergetriebe (14) zwei zueinander parallele und voneinander beabstandete Verteilerwellen (14f,14r) aufweist, welche von der ersten Getriebegehäuse-Stirnwand (10c) zur zweiten Getriebegehäuse-Stirnwand (10d) durchlaufend jeweils einen ersten Wellenanschluß (14k,14u) und einen zweiten Wellenanschluß (14j,14t) miteinander verbinden.

15. Bearbeitungsmaschine nach Anspruch 14,
dadurch gekennzeichnet,
daß die beiden Verteilerwellen (14f,14r) mit je einem Verteilerzahnrad (14l,14q) drehfest verbunden sind, daß zwischen den beiden Verteilerzahnrädern (14l,14q) ein Zwischenzahnrad (14n) auf einer Zwischenwelle (14o) in dem Antriebsgehäuse (10) gelagert ist und daß eine der Verteilerwellen (14f,14r) über ein Übertragungsgetriebe (14h, 14i, 14e,14a) mit dem Antriebsmotor (16) antriebsmäßig verbunden ist.

16. Bearbeitungsmaschine nach Anspruch 15,
dadurch gekennzeichnet,
daß die Zwischenwelle (14o) an mindestens einem Ende (48a,52a) zum Antrieb einer Hilfswelle (48b,52c) ausgebildet ist.

17. Bearbeitungsmaschine nach Anspruch 16,
dadurch gekennzeichnet,
daß die Hilfswelle (48b,52c) zwischen zwei an einer Antriebsgehäuse-Stirnwand (10c,10d) angebrachten Gehäusekästen (18, 20,22,24) gelagert und mit einer Transporteinrichtung (48,52) verbunden ist, welche dazu bestimmt und geeignet ist, zu bearbeitende Werkstücke quer zu den Sichtwänden (20a,20b) der beiden Gehäusekästen (18,20,22,24) zwischen diesen Gehäusekästen hindurch zu transportieren.

18. Bearbeitungsmaschine nach einem der Ansprüche 1 - 17,
dadurch gekennzeichnet,
daß die Anschlußstellen (14k,14u,14j,14t) als Trennkupplungen ausgebildet sind und die Gehäusekästen (18,20,22,24) lösbar mit dem Antriebsgehäuse (10) und ggf. mit den Endkästen (26,28) verbunden sind.

19. Bearbeitungsmaschine nach einem der Ansprüche 1 - 18,
dadurch gekennzeichnet,
daß die Gehäusekastenwellen (30) als Schneckenwellen ausgebildet sind und daß diese Schneckenwellen mit Schneckenrädern (34a) zugehöriger Bearbeitungseinheiten (32) in Eingriff stehen.

20. Bearbeitungsmaschine nach Anspruch 19,
dadurch gekennzeichnet,
daß die Schneckenräder (34a) in den jeweiligen Gehäusekästen auf Schneckenradwellen (34) angeordnet sind, welche ständig in dem jeweiligen Gehäusekasten gelagert sind, und daß die Schneckenradwellen (34) an jeweils mindestens einem Ende ein Trennkupplungselement (32c) aufweisen, welches die Verbindung mit jeweils einer Antriebswelle (32b) einer Bearbeitungseinheit (32) gestattet.

21. Bearbeitungsmaschine nach einem der Ansprüche 1 - 20,
dadurch gekennzeichnet,
daß eine als Schneckenwelle ausgebildete Gehäusekastenwelle (30a,30b) eines Gehäusekastens (20) in eine Mehrzahl von Schneckenwellenabschnitten (30a,30b) unterteilt ist, welche an der Unterteilungsstelle gelagert und durch jeweils eine Trennkupplung (30d) miteinander verbunden sind.

22. Bearbeitungsmaschine nach einem der Ansprüche 1 - 21,
dadurch gekennzeichnet,
daß eine Stanzpresse (40) an einer Gehäusekasten-Sichtwand (20a) befestigbar und durch eine Gehäusekastenöffnung (20h) hindurch in Antriebsverbindung mit der Gehäusekastenwelle (30) bringbar ist.

23. Bearbeitungsmaschine nach einem der Ansprüche 1 - 22,
dadurch gekennzeichnet,
daß eine Bandvorschubeinrichtung (36) an einer Gehäusekasten-Sichtwand (20a) befestigbar und durch eine Gehäusekastenöffnung (20h) hindurch in Antriebsverbindung mit der zugehörigen Gehäusekastenwelle (30) bringbar ist.

24. Bearbeitungsmaschine nach einem der Ansprüche 1 - 23,
dadurch gekennzeichnet,
daß die Drehzahl der Bearbeitungseinheit (32) gegenüber der Drehzahl der Gehäusekastenwelle (30) ins Langsame untersetzt ist mit einem Untersetzungsverhältnis von 1 : 2 bis 1 : 20, vorzugsweise 1 : 4 bis 1 : 10.

25. Bearbeitungsmaschine nach einem der Ansprüche 1 - 24,
dadurch gekennzeichnet,
daß ein Antriebsmotor (16) mit dem Verteilergetriebe (14) über eine Brems-Kupplungskombination verbunden ist.

26. Bearbeitungsmaschine nach einem der Ansprüche 1 - 25,
dadurch gekennzeichnet,
daß an dem Antriebsgehäuse (10) Umlenk- und/oder Verteilergehäuse (270,272) anbaubar sind.

27. Bearbeitungsmaschine nach einem der Ansprüche 1 - 12 und 18 - 26,
dadurch gekennzeichnet,
daß der erste Wellenanschluß (14k,14u) und der zweite Wellenanschluß (14j,14t) mit unterschiedlicher Drehzahl angetrieben sind.

28. Bearbeitungsmaschine nach Anspruch 27,
dadurch gekennzeichnet,
daß der erste Wellenanschluß (14k,14u) und der zweite Wellenanschluß (14j,14t) mit einer entsprechend einem ganzzahligen Verhältnis unterschiedlichen Drehzahl angetrieben sind.

29. Bearbeitungsmaschine nach einem der Ansprüche 27 und 28,
dadurch gekennzeichnet,
daß der erste Wellenanschluß (14k,14u) und der zweite Wellenanschluß (14j,14t) paarweise durch je eine Verteilerwelle (14f,14r) angetrieben sind, wobei diese Verteilerwelle (14f,14r) mit jeweils mindestens einem Wellenanschluß (14k,14u,14j,14t) über ein übersetzendes oder untersetzendes Zwischengetriebe (15,17) verbunden ist.

30. Bearbeitungsmaschine nach Anspruch 29,
dadurch gekennzeichnet,
daß bei Vorhandensein jeweils zweier erster Wellenanschlüsse (14k,14u) und zweier zweiter Wellenanschlüsse (14j,14t) jeweils einem Paar (14j,14k und 14t,14u) eine gemeinsame Verteilerwelle (14f,14r) zugeordnet ist, daß die beiden Verteilerwellen (14f,14r) mit je einem Verteilerzahnrad (14l,14q) drehfest verbunden sind, dass zwischen den beiden Verteilerzahnrädern (14l,14q) ein Zwischenzahnrad (14n) auf einer Zwischenwelle (14o) in dem Antriebsgehäuse (10) gelagert ist und daß eine der Verteilerwellen (14f,14r) über ein Übertragungsgetriebe (14h,14i, 14e,14a) mit dem Antriebsmotor (16) antriebsmäßig verbunden ist.

31. Bearbeitungsmaschine nach Anspruch 30,
dadurch gekennzeichnet,
daß die Zwischenwelle (14o) an mindestens einem Ende (48a, 52a) zum Antrieb einer Hilfswelle (48b,52c) ausgebildet ist, wobei die Hilfswelle (48b,52c) ggf. mit einer von der Zwischenwelle (14o) abweichenden Drehzahl umläuft.

32. Bearbeitungsmaschine nach einem der Ansprüche 1 - 31,
dadurch gekennzeichnet,
daß an dem Antriebsgehäuse (10) Umlenk- und/oder Verteilergehäuse (272) anbaubar sind, welche mit drehzahlverändernden Getriebemitteln (274) ausgerüstet sind.

33. Bearbeitungsmaschine nach einem der Ansprüche 1 - 32,
dadurch gekennzeichnet, daß sie als Stanz- und Biegeautomat zu Bearbeitung von Draht- und Bandmaterial (38) ausgebildet ist.

## Claims

1. Processing machine,
comprising a drive unit with a drive housing (10) and with a distributor gearing (14) accommodated within the drive housing (10) and attached to a drive motor (16),
where the drive housing (10) comprises two mutually opposite and mutually parallel drive housing face walls (10c, 10d) and at least one drive housing visual wall (10a) extending orthogonally to the drive housing face walls (10c, 10d)
where further the distributor gear (14) comprises in a first drive housing face wall (10c) at least one first shaft connection (14k, 14u) with axis of rotation orthogonal to the first drive housing face wall (10c),
where furthermore this first drive housing face wall (10c) is formed in the surrounding region of the at least one shaft connection (14k, 14u) for the attachment of a first housing box (18, 20),
where further this first housing box (18, 20) comprises a face wall attachment face (20e) for the attachment to the first drive housing face wall (10c) and at least one housing box visual wall (20a, 20b) extending parallel to the drive housing visual wall (10a, 10b),
where further in the first housing box (18, 20) there is mounted at least one housing box shaft (30) intended and suitable for attachment to the at least one first shaft connection (14k, 14u) and extending with its axis orthogonally to the first face wall attachment face (20e)
where furthermore on the housing box visual wall (20a, 20b) there is provided at least one securing location for a processing unit and furthermore in the housing box visual wall (20a, 20b) at least one opening (20h, 20i) is provided for the provision of a drive connection between the processing unit (32) and the housing box shaft (30), characterised in that the distributor gear (14) comprises in the second drive housing face wall (10d) at least one second shaft connection (14j, 14t) with axis of rotation orthogonal to this drive housing face wall (10d), and in that this second drive housing face wall (10d) is formed for the attachment of a further gear means receiving housing, especially a second housing box (22, 24) substantially corresponding to the first housing box (18, 20), in the region surrounding the at least one second shaft connection (14j, 14t).

2. Processing machine according to Claim 1, characterised in that a first shaft connection (14k) in the first drive housing face wall (10c) and a second shaft connection (14j) in the second drive housing face wall (10d) are arranged in axial alignment with one another and in that housing boxes (18, 22) pertaining to the first (14d) and the second shaft connection (14j) are fittable on the pertinent drive housing face walls (10c, 10d) in such a way that they are substantially aligned with one another in the axial direction of the pertinent housing box shafts (30).

3. Processing machine according to one of Claims 1 and 2, characterised in that on the first drive housing face wall (10c) and the second (10d) there are provided in each case two first shaft connections (14k, 14u) and second shaft connections (14j, 14t) respectively, with spacing from one another, a first shaft connection (14k, 14u) and a second shaft connection being in alignment with one another, housing boxes (18, 20, 22, 24) being fittable in the region of both shaft connections (14k, 14u, 14j, 14t) of the two drive housing face walls (10c, a0d).

4. Processing machine according to one of Claims 1 to 3, characterised in that the housing box visual walls (20a, 20b) of the first (18, 20) and optionally of the second (22, 24) housing box lie substantially flush with a respective drive housing visual wall (10a, 10b).

5. Processing machine according to one of Claims 1 to 4, characterised in that the drive housing (10) comprises a further drive housing visual wall (10b) extending parallel to and spaced from the drive housing visual wall (10a).

6. Processing machine according to Claim 5, characterised in that the housing boxes (18 to 24) each comprise a further housing box visual wall (20b) extending parallel to the further drive housing visual wall (10b), in that this further housing box visual wall (20b) also comprises at least one fastening location and an opening (20i) for a processing unit (32) and in that the further housing box visual wall (20b) lies substantially flush with the further drive housing visual wall (10b).

7. Processing machine according to one of Claims 1 to 6, characterised in that the housing boxes (18 to 24) comprise at their ends remote from the face wall attachment faces (20e), an end box attachment face (20g) for attachment to a face wall of an end box (26, 28).

8. Processing machine according to one of Claims 1 to 7, characterised in that the housing boxes (18 to 24), considered in a sectional plane perpendicular to the respective shaft axial direction, possess a substantially rectangular outline which is formed by two mutually parallel visual walls (20a, 20b) spaced from one another and two connecting walls (20c, 20d) connecting these visual walls (20a, 20b).

9. Processing machine according to Claim 8, characterised in that the mutually adjacent connecting walls (20d, 20c) of two housing boxes (18, 20) fitted on one and the same drive housing face wall (19c) form at least one passage (42) between them.

10. Processing machine according to one of Claims 1 to 9, characterised in that the drive housing (10) and optionally one or two end boxes (26, 28) are formed as a respective vertical column.

11. Processing machine according to Claim 10, characterised in that two housing boxes (18, 20, 22, 24) are arranged one over another on at least one drive housing face wall (10c, 10d) of the drive housing (10).

12. Processing machine according to one of Claims 1 to 11, characterised in that the drive housing (10) and optionally the end boxes (26, 28) are arranged on a base carrier (12).

13. Processing machine according to one of Claims 1 to 12, characterised in that the distributor gear (14) comprises at least one distributor shaft (14f, 14r) which, continuing from the first drive housing face wall (10c) to the second (10d), connects a first shaft connection (14k, 14u) and a second shaft connection (14j, 14t) with one another.

14. Processing machine according to Claim 13, characterised in that the distributor gear (14) comprises two mutually parallel and mutually spaced distributor shafts (14f, 14r) which, continuing from the first gear housing face wall (10c) to the second gear housing face wall (10d),in each case connect a first shaft connection (14k, 14u) and a second shaft connection (14j, 14t) with one another.

15. Processing machine according to Claim 14, characterised in that the two distributor shafts (14f, 14r) are connected fast in rotation with a distributor toothed wheel (14l, 14q) each, in that between the two distributor toothed wheels (14l, 14q) an intermediate toothed wheel (14n) is mounted on an intermediate shaft (14o) in the drive housing (10) and in that one of the distributor gears (14f, 14r) is connected for drive with the drive motor (16) through a transmission gear (14h, 14i).

16. Processing machine according to Claim 15, characterised in that the intermediate shaft (14o) is formed at one end (48a, 52a) at least for the drive of an auxiliary shaft (48b, 52c).

17. Processing machine according to Claim 16, characterised in that the auxiliary shaft (48b, 52c) is mounted between two housing boxes (18, 20, 22, 24) fitted on a drive housing face wall (10c, 10d) and is connected with a transport apparatus (48, 52) which is intended and adapted to transport workpieces to be worked transversely to the visual walls (20a, 20b) of the two housing boxes (18, 20, 22, 24) through between these housing boxes.

18. Processing machine according to Claim 1, characterised in that the shaft connections (14k, 14u, 14j, 14t) are formed as separator couplings and the housing boxes (18, 20, 22, 24) are detachably connected with the drive housing (10) and possibly with the end boxes (26, 28).

19. Processing machine according to one of Claims 1 to 18, characterised in that the housing box shafts (30) are formed as worm shafts and in that these worm shafts are engageable with worm wheels (34a) of pertinent processing units (32).

20. Processing machine according to Claim 19, characterised in that the worm wheels (34a) are arranged in the respective housing boxes on worm wheel shafts (34) which ace constantly mounted in the respective housing boxes, and in that the worm wheel shafts (34) on at least one end each comprise a separator coupling element (32c) which permits the connection with a drive shaft (32b) of a processing unit (32).

21. Processing machine according to one of Claims 1 to 20, characterised in that a housing box shaft (30a, 30b), formed as worm shaft, of a housing box (20) is divided into a plurality of worm shaft sections (30a, 30b) which are mounted at division points and connected with one another by respective separator couplings (30d).

22. Processing machine according to one of Claims 1 to 21, characterised in that a stamping press (40) is securable to a housing box visual wall (20a) and is bringable, through a housing box opening (20h), into drive connection with the housing box shaft (30).

23. Processing machine according to one of Claims 1 to 22, characterised in that a strip feed device (36) is securable to a housing box visual wall (20a) and is bringable through a housing box opening (20h) into drive connection with a respective housing box shaft (30).

24. Processing machine according to one of claims 1 to 22, characterised in that the rotation rate of a processing unit (32) is geared down compared with the rotation rate of the housing box shaft (30), with a step-down ratio of 1 : 2 to 1 : 20, preferably 1 : 4 to 1 : 10.

25. Processing machine according to one of Claims 1 to 24, characterised in that a drive motor (16) is connected with the distributor gear (14) through a combined brake-coupling device.

26. Processing machine according to one of Claims 1 to 25, characterised in that a deflector and/or distributor housing (270, 272) is attachable to the drive housing (10).

27. Processing machine according to one of Claims 1 to 12, and 18 to 26, characterised in that the first shaft connection (14k, 14u) and the second shaft connection (14j, 14t) are driven at different rotation rates.

28. Processing machine according to Claim 27, characterised in that the first shaft connection (14k, 14u) and the second shaft connection (14j, 14t) are driven with rotation rates differing according to an integral ratio.

29. Processing machine according to one of Claims 27 and 28, characterised in that the first shaft connection (14k, 14u) and the second shaft connection (14j, 14t) are driven as a pair by a distributor shaft (14f, 14r) each, this distributor shaft (14f, 14r) being connected in each case with at least one shaft connection (14k, 14u, 14j, 14t) through a step-up or step-down intermediate gear (15, 17).

30. Processing machine according to Claim 29, characterised in that in the case of presence of two first shaft connections (14k, 14u) and two second shaft connections (14j, 14t), common distributor shafts (14f, 14r) are allocated to respective pairs (14j, 14k, and 14t, 14u), in that the two distributor shafts (14f, 14r) are connected fast in rotation each with a distributor toothed wheel (14l, 14q), in that between the two distributor toothed wheels (14l, 14q) an intermediate toothed wheel (14n) is mounted on an intermediate shaft (14o) in the drive housing (10), and in that one of the distributor shafts (14f, 14r) is in drive connection through a transmission gear (14h, 14i, 14e, 14a) with the drive motor (16).

31. Processing machine according to Claim 31, characterised in that the intermediate shaft (140) is formed at one end (48a, 52a) at least for the drive of an auxiliary shaft (48b, 52c), wherein the auxiliary shaft (48b, 52c) optionally revolves at a speed different from the intermediate shaft (140).

32. Processing machine according to one of Claims 1 to 31, characterised in that a deflector and/or a distributor housing (272), which is equipped with a rotation rate-varying gear means (274), is attachable to the drive housing (10).

33. Processing machine according to one of Claims 1 to 32, characterised in that it is formed as an automatic stamping and bending machine for the processing of wire or strip material (38).

## Revendications

1. Machine d'usinage comportant une unité d'entraînement avec un boîtier d'entraînement (10) et avec une transmission de distribution (14) logée à l'intérieur du boîtier d'entraînement (10), raccordée à un moteur d'entraînement (16),
dans laquelle le boîtier d'entraînement (10) présente deux parois frontales (10c, 10d) parallèles entre elles et se faisant face l'une à l'autre et au moins une paroi visible (10a) orthogonale aux parois frontales,
dans laquelle en outre la transmission de distribution (14) comporte dans une première paroi frontale (10c) du boîtier d'entraînement au moins un premier raccordement d'arbre (14k, 14u) avec axe de rotation orthogonal à la première paroi frontale (10c) du boîtier d'entraînement,
dans laquelle en outre cette première paroi frontale (10c) du boitier d'entraînement est réalisée au voisinage du raccordement d'arbre (14k, 14u) au moins unique, pour le montage d'un premier coffret de boîtier (18, 20),
dans laquelle en outre ce premier coffret de boîtier (18, 20) comporte une surface de raccordement (20e) pour le raccordement à la première paroi frontale (10c) du boîtier d'entraînement et au moins une paroi visible (20a, 20b) parallèle à la paroi visible (10a, 10b) du boîtier d'entraînement,
dans laquelle en outre il est monté dans le premier coffret de boitier (18, 20) au moins un arbre (30) du coffret de boitier destiné et convenant à être raccordé au premier raccordement d'arbre (14k, 14u) au moins unique, avec son axe orthogonal à la première surface de raccordement (20e) de la paroi frontale,
dans laquelle en outre il est prévu sur la paroi visible (20a, 20b) du coffret de boîtier au moins un point de fixation pour une unité d'usinage (32) et au moins une ouverture (20h, 20i) est prévue en outre dans la paroi visible (20a, 20b) du coffret de boîtier, pour réaliser une liaison d'entraînement entre l'unité d'usinage (32) et l'arbre (30) du coffret de boîtier,
caractérisée
en ce que la transmission de distribution (14) présente dans la deuxième paroi frontale (10d) du boîtier d'entraînement au moins un deuxième raccordement d'arbre (14j, 14t) avec axe de rotation orthogonal à cette paroi frontale (10d) et en ce que cette deuxième paroi frontale (10d) du boîtier d'entraînement est conçue pour le raccordement d'un autre boîtier logeant des moyens de transmission, en particulier d'un deuxième coffret de boîtier (22, 24) correspondant sensiblement au premier coffret de boîtier (18, 20), au voisinage du deuxième raccordement d'arbre (14j, 14t) au moins unique.

2. Machine d'usinage selon la revendication 1,
caractérisée
en ce qu'un premier raccordement d'arbre (14k) est prévu dans la première paroi frontale (10c) du boîtier d'entraînement et un deuxième raccordement d'arbre (14j) dans la deuxième paroi frontale (10d) du boîtier d'entraînement, alignés entre eux axialement et en ce que des coffrets de boîtier (18, 22), faisant partie du premier raccordement d'arbre (14d) et du deuxième (14j), peuvent être appliqués sur les parois frontales (10c, 10d) correspondantes du boîtier d'entraînement, de manière à être alignés entre eux dans la direction axiale des arbres (30) correspondants des coffrets de boîtier.

3. Machine d'usinage selon l'une des revendications 1 et 2,
caractérisée
en ce que sur la première paroi frontale (10c) et la deuxième paroi frontale (10d) du boîtier d'entraînement sont prévus respectivement deux premiers raccordements d'arbre (14k, 14u) et deux deuxièmes raccordements d'arbre (14j, 14t), espacés l'un de l'autre, un premier raccordement d'arbre (14k, 14u) et un deuxième (14j, 14t) étant alignés entre eux et un coffret de boîtier (18, 20, 22, 24) pouvant être appliqué dans la région de deux raccordements d'arbre (14k, 14u, 14j, 14t) des deux parois frontales (10c, 10d) du boîtier d'entraînement.

4. Machine d'usinage selon l'une des revendications 1 à 3,
caractérisée
en ce que les parois visibles (20a, 20b) du premier (18, 20) et éventuellement du deuxième coffret de boîtier (22, 24) se trouvent sensiblement dans le même plan que la paroi visible (10a, 10b) correspondante du boîtier d'entraînement.

5. Machine d'usinage selon l'une des revendications 1 à 4,
caractérisée
en ce que le boîtier d'entraînement (10) présente une autre paroi visible (10b) parallèle à la paroi visible (10a) du boîtier d'entraînement et espacée de celle-ci.

6. Machine d'usinage selon la revendication 5,
caractérisée
en ce que les coffrets de boîtier (18 à 24) comportent chacun une autre paroi visible (20b) parallèle à l'autre paroi visible (10b) du boîtier d'entraînement, en ce que ces autres parois visibles (20b) du coffret de boîtier présentent aussi chacune au moins un point de fixation et une ouverture (20i) pour une unité d'usinage (32) et en ce que les autres parois visibles (20b) du coffret de boîtier se trouvent sensiblement dans le même plan que l'autre paroi visible (10b) du boîtier d'entraînement.

7. Machine d'usinage selon l'une des revendications 1 à 6,
caractérisée
en ce que les coffrets de boîtier (18 à 24) comportent à chacune de leurs extrémités éloignées des surfaces de raccordement (20e) de la paroi frontale, une surface de raccordement (20g) de coffret terminal, pour le raccordement respectif à une paroi frontale d'un coffret terminal (26, 28).

8. Machine d'usinage selon l'une des revendications 1 à 7,
caractérisée
en ce que les coffrets de boîtier (18 à 24), vus dans un plan de coupe perpendiculaire à la direction axiale respective des arbres, présentent un contour sensiblement rectangulaire, qui est formé par deux parois visibles (20a, 20b) parallèles entre elles et espacées l'une de l'autre et par deux parois de liaison (20c, 20d) reliant ces parois visibles (20a, 20b).

9. Machine d'usinage selon la revendication 8,
caractérisée
en ce que les parois de liaison (20d, 20c) voisines l'une de l'autre de deux coffrets de boîtier (18, 20) fixés sur une seule et même paroi frontale (10c) du boîtier d'entraînement, forment entre elles au moins un passage (42).

10. Machine d'usinage selon l'une des revendications 1 à 9,
caractérisée
en ce que le boîtier d'entraînement (10) et éventuellement un ou deux coffrets d'extrémité (26, 28) sont configurés chacun sous la forme d'une colonne verticale.

11. Machine d'usinage selon la revendication 10,
caractérisée
en ce que sur au moins une paroi frontale (10c, 10d) du boîtier d'entraînement (10) sont superposés deux coffrets de boîtier (18, 20, 22, 24).

12. Machine d'usinage selon l'une des revendications 1 à 11,
caractérisée
en ce que le boîtier d'entraînement (10) et éventuellement les coffrets d'extrémité (26, 28) sont placés sur un support de base (12).

13. Machine d'usinage selon l'une des revendications 1 à 12,
caractérisée
en ce que la transmission de distribution (14) comporte au moins un arbre de distribution (14f, 14r), qui, en continu, de la première paroi frontale (10c) à la deuxième paroi frontale (10d) du boitier d'entraînement, relie entre eux un premier raccordement d'arbre (14k, 14u) et un deuxième raccordement d'arbre (14j, 14t).

14. Machine d'usinage selon la revendication 13,
caractérisée
en ce que la transmission de distribution (14) comporte deux arbres de distribution (14f, 14r) parallèles entre eux et espacés l'un de l'autre, qui, en continu, de la première paroi frontale (10c) à la deuxième paroi frontale (10d) du boîtier de transmission, relient entre eux un premier raccordement d'arbre (14k, 14u) et un deuxième raccordement d'arbre (14j, 14t).

15. Machine d'usinage selon la revendication 14,
caractérisée
en ce que les deux arbres de distribution (14f, 14r) sont reliés entre eux solidaires en rotation avec une roue dentée de distribution (14l, 14q), en ce qu'entre les deux roues dentées de distribution (14l, 14q) est montée une roue dentée intermédiaire (14n) sur un arbre intermédiaire (14o), dans le boitier d'entraînement (10) et en ce que l'un des arbres de distribution (14f, 14r) est relié en entraînement avec le moteur d'entraînement (16), par un mécanisme de transfert (14h, 14i, 14e, 14a).

16. Machine d'usinage selon la revendication 15,
caractérisée
en ce que l'arbre intermédiaire (14o) est conçu au moins à une extrémité (48a, 52a) pour l'entraînement d'un arbre auxiliaire (48b, 52c).

17. Machine d'usinage selon la revendication 16,
caractérisée
en ce que l'arbre auxiliaire (48b, 52c) est monté entre deux coffrets de boîtier (18, 20, 22, 24), placés sur une paroi frontale (10c, 10d) du boîtier d'entraînement et est relié à un dispositif de transport (48, 52) qui est destiné et est propre à transporter des pièces à usiner transversalement aux parois visibles (20a, 20b) des deux coffrets de boîtier (18, 20, 22, 24), entre ceux-ci.

18. Machine d'usinage selon l'une des revendications 1 à 17,
caractérisée
en ce que les points de raccordement (14k, 14u, 14j, 14t) sont conçus en tant qu'accouplements séparables et les coffrets de boîtier (18, 20, 22, 24) sont reliés de manière amovible au boîtier d'entraînement (10) et éventuellement aux coffrets d'extrémité (26, 28).

19. Machine d'usinage selon l'une des revendications 1 à 18,
caractérisée
en ce que les arbres (30) des coffrets de boîtier sont des arbres à vis sans fin et en ce que ces arbres à vis sans fin engrènent avec des roues tangentes (34a) d'unités d'usinage (32) correspondantes.

20. Machine d'usinage selon la revendication 19,
caractérisée
en ce que les roues tangentes (34) sont montées dans les coffrets de boîtier respectifs sur des arbres de roues tangentes (34), qui sont montés en permanence dans le coffret de boîtier respectif, et en ce que les arbres (34) de roues tangentes présentent à au moins une extrémité un élément d'accouplement séparable (32c), qui autorise la liaison avec un arbre d'entraînement (32b) d'une unité d'usinage (32).

21. Machine d'usinage selon l'une des revendications 1 à 20,
caractérisée
en ce qu'un arbre de coffret de boîtier (30a, 30b), conçu en tant qu'arbre à vis sans fin, d'un coffret de boîtier (20), est partagé en une pluralité de tronçons (30a, 30b) qui sont montés au point de subdivision et qui sont reliés entre eux par un accouplement séparable (30d).

22. Machine d'usinage selon l'une des revendications 1 à 21,
caractérisée
en ce qu'une presse à découper (40) peut être fixée sur une paroi visible (20a) du coffret de boîtier et peut être amenée, à travers une ouverture (20h) du coffret de boîtier en liaison d'entraînement avec l'arbre (30) du coffret de boîtier.

23. Machine d'usinage selon l'une des revendications 1 à 22,
caractérisée
en ce qu'un dispositif d'avance de bande (36) peut être fixé sur une paroi visible (20a) du coffret de boîtier et peut être amené, à travers une ouverture (20h) du coffret de boitier, en liaison d'entraînement avec l'arbre (30) correspondant du coffret de boîtier.

24. Machine d'usinage selon l'une des revendications 1 à 23,
caractérisée
en ce que la vitesse de rotation de l'unité d'usinage (32) est démultipliée par rapport à la vitesse de rotation de l'arbre (30) du coffret de boîtier, avec un rapport de démultiplication de 1 : 2 à 1 : 20, de préférence 1 : 4 à 1 : 10.

25. Machine d'usinage selon l'une des revendications 1 à 24,
caractérisée
en ce qu'un moteur d'entraînement (16) est relié à la transmission de distribution (14) par une combinaison frein-accouplement.

26. Machine d'usinage selon l'une des revendications 1 à 25,
caractérisée
en ce que sur le boîtier d'entraînement (10) peut être monté en saillie un boîtier de renvoi et/ou de distribution (270, 272).

27. Machine d'usinage selon l'une des revendications 1 à 12 et 18 à 26,
caractérisée
en ce que le premier raccordement d'arbre (14k, 14u) et le deuxième raccordement d'arbre (14j, 14t) sont entraînés à une vitesse de rotation différente.

28. Machine d'usinage selon la revendication 27,
caractérisée
en ce que le premier raccordement d'arbre (14k, 14u) et le deuxième raccordement d'arbre (14j, 14t) sont entraînés à une vitesse différente correspondant à un rapport entier.

29. Machine d'usinage selon l'une des revendications 27 et 28,
caractérisée
en ce que le premier raccordement d'arbre (14k, 14u) et le deuxième raccordement d'arbre (14j, 14t) sont entraînés deux par deux par un arbre de distribution (14f, 14r), cet arbre de distribution (14f, 14r) étant relié avec au moins un raccordement d'arbre (14k, 14u, 14j, 14t), par une transmission intermédiaire (15, 17) de surmultiplication ou de démultiplication.

30. Machine d'usinage selon la revendication 29,
caractérisée
en ce qu'en présence de deux premiers raccordements d'arbre (14k, 14u) et de deux deuxièmes raccordements d'arbre (14j, 14t) un arbre de distribution (14f, 14r) est associé à une paire (14j, 14k et 14t, 14u), en ce que les deux arbres de distribution (14f, 14r) sont reliés chacun solidaires en rotation avec une roue dentée de distribution (14l, 14q), en ce qu'entre les deux roues dentées de distribution (14l, 14q), une roue dentée intermédiaire (14n) est montée sur un arbre intermédiaire (14o) dans le boîtier d'entraînement (10) et en ce que l'un des arbres de distribution (14f, 14r) est relié en entraînement avec le moteur d'entraînement (16), par un mécanisme de transfert (14h, 14i, 14e, 14a).

31. Machine d'usinage selon la revendication 30,
caractérisée
en ce que l'arbre intermédiaire (14o) est conçu à au moins une extrémité (48a, 52a) pour l'entraînement d'un arbre auxiliaire (48b, 52c), l'arbre auxiliaire (48b, 52c) tournant éventuellement à une vitesse différente de celle de l'arbre intermédiaire (14o).

32. Machine d'usinage selon l'une des revendications 1 à 31,
caractérisée
en ce que des boîtiers de renvoi et/ou de distribution (272) qui peuvent montés en saillie sur le boîtier d'entraînement (10), sont équipés de moyens de transmission (274) à vitesse variable.

33. Machine d'usinage selon l'une des revendications 1 à 32,
caractérisée
en ce qu'elle conçue en tant que machine automatique à découper et à cintrer pour l'usinage de matériaux en fil et en bande (38).
